# EUROPEAN PATENT SPECIFICATION

(11) **EP 4 425 991 B1**
(45) Date of publication and mention of the grant of the patent: **11.02.2026**
(21) Application number: 22885656.3
(22) Date of filing: 11.10.2022
(51) Int. Cl.: H04W 24/02, H04W 28/18, H04W 88/12

(54) **NETWORK INTEGRATION CONTROL METHOD AND APPARATUS**
VERFAHREN UND VORRICHTUNG ZUR STEUERUNG DER NETZWERKINTEGRATION
PROCÉDÉ ET APPAREIL DE COMMANDE D'INTÉGRATION DE RÉSEAU

(30) Priority: 25.10.2021 CN 202111239824
(43) Date of publication of application: 04.09.2024
(73) Proprietor: Datang Mobile Communications Equipment Co., Ltd., Beijing 100085 (CN)
(72) Inventor: SUN, Huiqing, Beijing 100085 (CN); LUO, Zhangyu, Beijing 100085 (CN)
(74) Representative: Maiwald GmbH
(86) International application number: PCT/CN2022/124607
(87) International publication number: WO 2023/071777

(56) References cited:
- WO-A1-2021/066587
- WO-A1-2021/101355
- CN-A- 113 163 414
- CN-A- 113 448 744
- US-A1- 2022 279 498
- O-RAN: "O-RAN Working Group 3 Near-Real-time RAN Intelligent Controller E2 Service Model (E2SM), RAN Control", 10 August 2021 (2021-08-10), pages 1 - 262, XP093130657, Retrieved from the Internet <URL:https://orandownloadsweb.azurewebsites.net/specifications> [retrieved on 20240213]
- ANONYMOUS: "O-RAN Working Group 3, Near-Real-time RAN Intelligent Controller E2 Service Model (E2SM), RAN Function Network Interface (NI)", no. ORAN-WG3.E2SM-NI-v01.00.00, 31 January 2020 (2020-01-31), pages 1 - 45, XP009539594, Retrieved from the Internet <URL:https://orandownloadsweb.azurewebsites.net/specifications>
- ANONYMOUS: "O-RAN Working Group 3, Near-Real-time RAN Intelligent Controller, E2 Application Protocol (E2AP). O-RAN.WG3.E2AP-v01.01", O-RAN ALLIANCE WG3, HTTPS://WWW.O-RAN.ORG/SPECIFICATION-ACCESS, O-RAN ALLIANCE, 15 July 2020 (2020-07-15), pages 1 - 84, XP009536365

## Description

### TECHNICAL FIELD

The present disclosure relates to the field of communication technology, in particular to a network integration control method and a network integration control device.

### BACKGROUND

In an Open Radio Access Network (O-RAN), an E2 node is controlled by a Near Real Time RAN Intelligent Controller (Near-RT RIC) through an E2 interface in accordance with an opened function of the E2 node, so as to optimize RAN radio resources. An E2 service model provides a series of RAN function open services, including a Report service, an Insert service, a Control service, and a Policy service. The Insert service includes that a normal function procedure is paused by the E2 node in accordance with information subscribed by the Near-RT RIC, so as to trigger an Insert operation. The Control service includes that the Near-RT RIC requires an RAN to execute a designated action in accordance with a Control Message, and the designated action is triggered inside the Near-RT RIC, or the designated action serves as a feedback to an Insert action after the Insert operation.

In the related art, the Insert and Control operations of an isolated, individual action control method are merely supported between the Near-RT RIC and the E2 node, but an x Application (xAPP) loaded onto the Near-RT RIC has an expansion capability of integrated configuration on multiple functions. Hence, it is impossible for a conventional method to meet the requirement on xAPP Multiple Input Multiple Output (MIMO) synchronous configuration.

O-Ran: "O-RAN Working Group 3 Near-Real-time RAN Intelligent Controller E2 Service Model (E2SM), RAN Control", 10 August 2021 (2021-08-10), pages 1-262, XP093130657, provides a set of RAN Function exposure services described in clause 6.2 and has been prepared with the assumption that the same E2SM may be used to describe either a single RAN Function in the E2 Node handling all RAN control related call processes or more than one RAN Function in the E2 Node with each instance handling a subset of the RAN control related call processes on the E2 Node.

### SUMMARY

An object of the present disclosure is to provide a network integration control method and a network integration control device, so as to solve the problem in the related art that it is impossible for a conventional method to meet the requirement on xAPP MIMO synchronous configuration.

In one aspect, the present disclosure provides in some embodiments a network integration control method as claimed in claim 1.

In another aspect, the present disclosure provides in some embodiments a network integration control method as claimed in claim 9.

In yet another aspect, the present disclosure provides in some embodiments a Near Real Time Radio Access Network Intelligent Controller, Near-RT RIC, as claimed in claim 14.

In still yet another aspect, the present disclosure provides in some embodiments a network node as claimed in claim 15.

Other aspects are claimed in the dependent claims.

The present disclosure has the following beneficial effects.

According to the embodiments of the present disclosure, the control request message transmitted by the Near-RT RIC to the network node controlled by the Near-RT RIC includes the relevant information about a plurality of control actions for a plurality of service styles, and the control acknowledgement message transmitted by the network node to the Near-RT RIC includes the execution outcomes of the plurality of actions for the plurality of service styles. As a result, it is able to optimize and control the xApp MIMO synchronous integration, prevent the occurrence of a waste of interface resources and a device processing failure caused when a part of actions are interrupted in a Control process completed in a single action sequence, reduce a processing delay of a base station, and reduce the device processing complexity due to the failure processing and reconfiguration, thereby to improve an optimization capability of the Near-RT RIC, and meet the requirements on more cases.

### BRIEF DESCRIPTION OF THE DRAWINGS

Fig. 1 is a flow chart of a network integration control method according to one embodiment of the present disclosure;
Fig. 2 is another flow chart of the network integration control method according to one embodiment of the present disclosure;
Fig. 3 is a schematic view showing inputs and outputs of an xApp according to one embodiment of the present disclosure;
Fig. 4 is another schematic view showing the inputs and outputs of the xApp according to one embodiment of the present disclosure;
Fig. 5 is yet another flow chart of the network integration control method according to one embodiment of the present disclosure;
Fig. 6 is still yet another flow chart of the network integration control method according to one embodiment of the present disclosure;
Fig. 7 is a schematic view showing a network integration control device according to one embodiment of the present disclosure;
Fig. 8 is another schematic view showing the network integration control device according to one embodiment of the present disclosure;
Fig. 9 is yet another schematic view showing the network integration control device according to one embodiment of the present disclosure; and
Fig. 10 is still yet another schematic view showing the network integration control device according to one embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments. In the following description, specific details of configurations and assemblies are merely provided to facilitate the understanding of the present disclosure. It should be appreciated that, a person skilled in the art may make further modifications and alternations without departing from the spirit of the present disclosure. In addition, for clarification, any known function and structure will not be described hereinafter.

It should be further appreciated that, such expressions as "one embodiment" and "one of the embodiments" involved in the specification intend to indicate that the features, structures or characteristics are contained in at least one embodiment of the present disclosure, rather than referring to a same embodiment. In addition, the features, structures or characteristics may be combined in any embodiment or embodiments in an appropriate manner.

It should be further appreciated that, the following serial numbers do not refer to the order of the steps. Actually, the order shall be determined in accordance with functions and internal logic of the steps, but shall not be construed as limiting the implementation in any form.

The expression "and/or" is merely used to describe the relationship between objects, and it includes three relationships. For example, "A and/or B" may represent that, there is only A, there are both A and B, and there is only B. Further, the symbol "/" usually refers to "or".

The expression "a plurality of" refers to two or more, and the other quantifiers are similar.

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

An object of the present disclosure is to provide a network integration control method and a network integration control device, so as to solve the problem in the related art that it is impossible for a conventional method to meet the requirement on xAPP MIMO synchronous configuration.

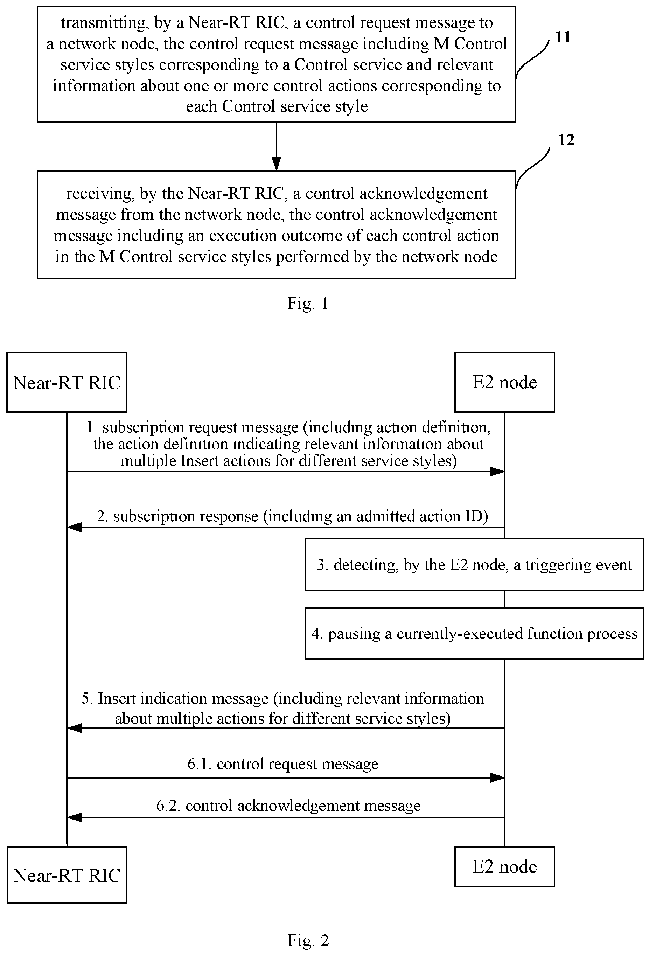

As shown in Fig. 1, the present disclosure provides in some embodiments a network integration control method for a Near-RT RIC, which includes the following steps.

Step 11: transmitting, by a Near-RT RIC, a control request message to a network node. The control request message includes M Control service styles corresponding to a Control service and relevant information about one or more control actions corresponding to each Control service style, wherein M is an integer greater than or equal to 1. In a possible embodiment of the present disclosure, M is greater than or equal to 2, i.e., a plurality of actions included in the control request message belongs to different Control service styles.

The network node is a network node controlled by the Near-RT RIC. The network node may be an E2 node, and the Near-RT RIC controls the E2 node through an E2 node, so as to optimize RAN radio resources. To be specific, when controlling the E2 node, the Near-RT RIC transmits the control request message to the E2 node, and the control request message includes relevant information about a plurality of actions corresponding to a plurality Control service styles. For example, the control request message includes actions a1, a2 and a3 corresponding to a Control service style 1 and actions b1, b2 and b3 corresponding to a Control service style 2.

The control request message carries the plurality of actions for different service styles and the relevant information about the actions, it is able to optimize the configuration of radio resources on the actions currently performed by the network node through control requests corresponding to the plurality of actions for different service styles.

Step 12: receiving, by the Near-RT RIC, a control acknowledgement message from the network node, the control acknowledgement message including an execution outcome of each control action in the M Control service styles performed by the network node.

Upon the receipt of the control request message, the network node returns the execution outcome of each action in different Control service styles included in the control request message, i.e., transmits the control acknowledgement message to the Near-RT RIC, so as to facilitate the subsequent processing of the Near-RT RIC.

An xApp is an application loaded in the Near-RT RIC so to achieve an RAN optimization function. In the embodiments of the present disclosure, the action corresponding to the Control service is just an operation outputted by the xApp for controlling the network node. For the xApp, through a plurality of control actions for different service styles included in the control request message and the control acknowledgement message, it is able to synchronously control the plurality of actions once, thereby to be adapted to an MIMO characteristic of the xApp.

According to the embodiments of the present disclosure, the control request message transmitted by the Near-RT RIC to the network node controlled by the Near-RT RIC includes the relevant information about a plurality of control actions for a plurality of service styles, and the control acknowledgement message transmitted by the network node to the Near-RT RIC includes the execution outcomes of the plurality of actions for the plurality of service styles. As a result, it is able to optimize and control the xApp MIMO synchronous integration, prevent the occurrence of a waste of interface resources and a device processing failure caused when a part of actions are interrupted in a Control process completed in a single action sequence, reduce a processing delay of a base station, and reduce the device processing complexity due to the failure processing and reconfiguration, thereby to improve an optimization capability of the Near-RT RIC, and meet the requirements on more cases.

In the embodiments of the present disclosure, a multiple-action integration Control process for different service styles is triggered by Insert, or triggered in the Near-RT RIC, which will be described hereinafter in conjunction with specific embodiments.

In a possible embodiment of the present disclosure, in the case that the Control process is triggered by Insert, the method includes: transmitting a subscription request message for subscribing an Insert service to the network node, the subscription request message including action definition about one or more Insert actions corresponding to subscribed M Insert service styles; and receiving an Insert indication message from the network node, the Insert indication message including relevant information about the Insert actions corresponding to the M Insert service styles.

In the embodiments of the present disclosure, before the execution of the Control process, the Near-RT RIC subscribes to the network node an Insert service including a plurality of actions corresponding to a plurality of service styles. The subscription information includes relevant information about a plurality of Insert actions corresponding to the subscribed service, e.g., action definition about an Insert action or a triggering event for the Insert action, and the plurality of actions belongs to different service styles. The action definition (e.g., Insert Indication Actions) is used to indicate a content to be indicated in the Insert inaction message for the plurality of actions.

Upon the receipt of the subscription request message, detects whether there is a triggering event. When the triggering event has been detected, the network node stops a currently-performed operation, executes the requested Insert service, and transmits the Insert indication message to the Near-RT RIC. The Insert indication message includes the relevant information about the plurality of Insert actions for different service styles. In this way, it is able to request the Near-RT RIC to control and optimize multiple actions for different service styles, thereby to provide the Insert service and the Control service for multiple actions belonging to different service styles.

When the Control process is triggered by the Insert service, as shown in Fig. 2, the control method includes the following steps.

Step 1: at first, the Near-RT RIC subscribes an Insert service, i.e., transmits a subscription request message (RIC Subscription Request) to the E2 node , so as to provide subscription-related information, e.g., subscribes an Insert action under the triggering of a given event. Action definition indicates multiple triggered Insert Indication Actions for different service styles and relevant parameters.

The action definition includes the relevant information about the Insert actions corresponding to a plurality of service styles, e.g., Insert Styles (X, Y), a plurality of actions corresponding to each service style (Insert Styles X: Action a1 and Action a2; Insert Styles Y: Action b1 and Action b2), and relevant parameters of each action.

To be specific, the action definition includes at least one of the following information.
(1) The quantity of requested Insert service styles, i.e., the quantity of Insert service styles included in the action definition. It is expressed in the form of a list, i.e., a sequence of Insert styles for multiple actions is displayed in a list.
(2) Requested Insert style, i.e., each Insert service style included in the message. When a sequence of Insert styles is expressed in the form of a list, the list includes each Insert service style.
(3) The quantity of Insert actions included in each Insert service style. Each Insert service style corresponds to a plurality of Insert actions. When the sequence of Insert styles is expressed in a list, a sequence of Insert indication action definition corresponding to each Insert service style is displayed in the list.
(4) Insert action ID. Each Insert action corresponding to each service style is expressed through an Insert action ID. The action definition is used to indicate information contents to be included in an Insert indication message, so the Insert action ID is further expressed in the form of an Insert indication ID.
(5) The quantity of RAN parameters for the Insert actions. Each Insert action has a corresponding RAN parameter expressed in the form of a list. The action definition is used to indicate information contents to be included in the Insert indication message, so the RAN parameters are expressed in the form of a list of RAN parameters for Insert indication.
(6) RAN parameter ID. The RAN parameter corresponding to each Insert action is expressed in the form of an RAN parameter ID.

In the embodiments of the present disclosure, the action definition of a plurality of actions for different service styles is expressed in the form of a list, i.e., the relevant information about the plurality of actions for different Insert service styles forms a sequence of Insert styles for multiple actions, and the list includes the actions corresponding to each Insert service style and information contents about each action. The action definition includes one of the above-mentioned information contents or a combination thereof, and it may further include the other information content, e.g., a UE ID. The quantity of Insert service styles in the list is a numerical range, e.g., from 1 to the maximum quantity of RIC styles. The quantity of Insert actions included in each Insert service style is a numerical range, e.g., from 1 to the maximum quantity of Insert actions. The quantity of RAN parameters for each Insert action is a numerical range, e.g., from 1 to the maximum quantity of RAN parameters associated with the action.

In the embodiments of the present disclosure, when the action definition of a plurality of actions is expressed in the form of a list, the action definition is shown in the following Table 1.

**Table 1: new definition about each Information Element (IE) for the action definition**

| IE/Group name | Presence | Range | IE type and reference | Semantic description |
|---|---|---|---|---|
| Sequence of Insert styles for multiple actions | | 1 to (the maximum quantity of RIC styles) | | |
| >Requested Insert style | M | | | |
| >Sequence of Insert indication action definition | | 1 to (the maximum quantity of Insert actions) | | |
| >>Insert action ID | M | | | |
| >>List of RAN parameters for Insert actions | M | 1 to (the maximum quantity of associated RAN parameters) | | |
| >>>RAN parameter ID | M | | | |
| UE ID | O | | | If an Insert indication for a specific UE has been subscribed |

In Table 1, "M" represents "mandatory", and "O" represents "optional".

The signs ">", ">>" and ">>>" indicate layers of information. For example, "requested Insert styles is a next layer of "sequence of Insert styles for multiple actions", i.e., the list of the sequence of Insert styles includes the requested Insert style; "Insert action ID" and "list of RAN parameters for Insert actions" are next layers of "sequence of Insert indication action definition"; and "RAN parameter ID" is a next layer of "list of RAN parameters for Insert actions, i.e., the list of RAN parameters for Insert actions includes an ID of each RAN parameter. The description about the layers of messages in the other tables is the same as that mentioned hereinabove, and thus will not be particularly defined herein.

Table 1 shows range constraints of the quantity of requested Insert styles, the quantity of Insert actions included in each Insert style and the quantity of RAN parameters associated with each Insert action. Table 2 shows the definition of each range constraint.

**Table 2**

| Range constraint | Description |
|---|---|
| The maximum quantity of requested Insert styles | The maximum quantity of Insert styles supported by an RAN function, having a value of (63) |
| The maximum quantity of Insert actions | The maximum quantity of Insert actions supported by the RAN function, having a value of (65535) |
| The maximum quantity of associated RAN parameters | The maximum quantity of RAN parameters supported by the RAN function for a specific Insert action, having a value of (65535) |

Step 2: the E2 node transmits a subscription response to the Near-RT RIC in accordance with the subscription request message. The subscription response includes actions admitted by the E2 node, e.g., a list of admitted actions (including an ID of each admitted action).

Step 3: the E2 node performs a corresponding Insert operation in accordance with multiple action information for different service styles in the subscription request message, i.e., detects a triggering event.

Step 4: after the E2 node has detected a corresponding triggering event, e.g., a radio resource (e.g., UE context or bearer context) changes or needs to be established, the E2 node pauses a currently-performed normal function process.

Step 5: the E2 node triggers a corresponding Insert indication message (Insert indication actions) in accordance with an indication in the action definition. The Insert indication actions carry multiple actions for different service styles, so as to request the Near-RT RIC to optimize and control an original process of the E2 node, e.g., to simultaneously perform the modification of Data Radio Bearer (DRB) Quality of Service (QoS) and QoS flow-to-DRB mapping. In this way, it is able to improve the utilization of the radio resources, and meet the user's requirement on QoS.

To be specific, the Insert indication message includes a first information element and a second information element. The first information element is, for example, an RIC indication header IE, and the second information element is, for example, an RIC indication message IE. The first information element includes at least one of a UE ID corresponding to the network node, an Insert style of the Insert indication message, or an event trigger condition ID, as shown in Table 3.

**Table 2: new definition of RIC indication header IE of Insert service**

| IE/Group name | Presence | Range | IE type and reference | Semantic description |
|---|---|---|---|---|
| UE ID | O | | | |
| RIC Insert style | M | | | for indicating Insert style M |
| Event Trigger Condition ID | O | | | an ID of a triggering condition for an event |

The event trigger condition ID is used to indicate that the Insert service is started under a specific event trigger condition.

In a possible embodiment of the present disclosure, the Insert style is a multiple configuration control request. In Table 3, the Insert style "Insert style M" indicated in the first information element is just the multiple configuration control request, i.e., a newly-defined Insert style, and a plurality of specific functional service styles is combined according to the practical need. "Insert style M" in Table 3 merely indicates an index of the Insert style.

To be specific, the second information element includes at least one of the following information.
(1) The quantity of Insert service styles indicated in the Insert indication message, i.e., the quantity of different Insert service types included in the second information element. It is expressed in the form of a list, i.e., a sequence of indicated Insert styles is indicated in a list.
(2) Indicated Insert styles in the Insert indication message, i.e., each Insert service style included in the Insert indication message. When the sequence of indicated Insert styles is indicated in a list, the list includes each indicated Insert service style.
(3) The quantity of Insert actions included in each Insert service style. Each Insert service style corresponds to a plurality of Insert actions. When the sequence of indicated Insert styles is indicated in a list, a sequence of Insert indication action definition corresponding to each Insert service style is displayed in the list.
(4) Insert action ID. Each Insert action corresponding to each Insert service style is expressed through an Insert action ID. The Insert action ID is further expressed in the form of an Insert indication ID.
(5) The quantity of RAN parameters for the Insert actions. Each Insert action has a corresponding RAN parameter expressed in the form of a list. The RAN parameters are expressed in the form of a list of RAN parameters for the actions for requesting the Near-RT RIC to perform control (list of RAN parameters requested).
(6) RAN parameter ID. The RAN parameter corresponding to each Insert action is identified through the RAN parameter ID.
(7) RAN parameter value type.

The RIC indication message IE includes one or more of the above-mentioned pieces of information. The RIC indication message IE for a plurality of actions for different service styles may be implemented in the form of a list, i.e., the second information elements corresponding to the plurality of actions are provided in a list as shown in Table 4.

**Table 4: newly-defined RIC indication message IE**

| IE/Group name | Presence | Range | IE type and reference | Semantic description |
|---|---|---|---|---|
| Sequence of indicated insert styles | | 1 to (the maximum quantity of RIC styles) | | |
| >Indicated Insert style | M | | | |
| > Sequence of Insert indication action definition | | 1 to (the maximum quantity of Insert actions) | | |
| >> Insert action ID | M | | | |
| >>List of RAN parameters requested | | 1 to (the maximum quantity of associated RAN parameters) | | |
| >>>RAN parameter ID | M | | | |
| >>> RAN parameter value type | M | | | |

Table 4 shows range constraints of the quantity of indicated Insert styles, the quantity of Insert actions included in each Insert style and the quantity of RAN parameters associated with each Insert action. Table 5 shows the definition of each range constraint.

**Table 5**

| Range constraint | Description |
|---|---|
| The maximum quantity of Insert styles | The maximum quantity of Insert styles supported by an RAN function, having a value of (63) |
| The maximum quantity of Insert actions | The maximum quantity of actions supported by the RAN function, having a value of (65535) |
| The maximum quantity of associated RAN parameters | The maximum quantity of RAN parameters supported by the RAN function for a specific action, having a value of (65535) |

In Table 4, the sequence of Insert styles indicates a series of indicated Insert styles in the Insert style M in an Insert process. Each indicated Insert style has a plurality of supported Insert actions, and each Insert Action is identified through an Insert Indication ID. The list of RAN parameters include styles of configuration parameters probably carried by the Insert action.

Through the above-mentioned Steps 1 to 5, the E2 node configures an Insert operation for multiple control actions belonging to a plurality of Insert service styles in a subscription process, pauses a normal progress in accordance with the Insert operation for the subscription after a designated event is triggered, and transmits the Insert indication message to the Near-RT RIC to request for the designated control actions for a plurality of service styles and the parameter configuration thereof in accordance with the Insert operation indicated by the multiple Insert indication IDs and the relevant RAN parameters. In the Insert process, in order to support multiple Insert actions for different service styles through the radio resource control, the key information elements in the RIC indication message in Step 5, i.e., RIC indication header IE and RIC indication message IE, are shown in Tables 3 and 4. Depending on the above-mentioned process and message mechanism, the Near-RT RIC subscribes the Insert service, so that the E2 node is paused in a certain function entity process and simultaneously notifies the Near-RT RIC of a plurality of actions used subsequently for optimization and control. In this way, it is able for the Near-RT RIC to conveniently perform RAN resource analysis and perform an operation for optimizing the radio resource configuration, thereby to achieve the intelligent RRM optimization.

Step 6: the Near-RT RIC optimizes and controls an original process of the E2 node in accordance with a synchronous configuration request in the Insert indication message, and a Control service includes an integration control combination of multiple actions for different service styles.

To be specific, Step 6 includes the following steps.

Step 6.1: the Near-RT RIC transmits the control request message, i.e., an RIC control request, to the network node, i.e., the E2 node, in accordance with the Insert indication message.

Step 6.2: the Near-RT RIC receives a control acknowledgement message (RIC Control Acknowledge) from the network node, i.e., the E2 node accepts the control request, returns an execution outcome of each control action in multiple actions corresponding to a plurality of Control styles, and transmits the RIC Control Acknowledge message to the Near-RT RIC for subsequent processing.

To be specific, the control request message includes a third information element and a fourth information element. The third information element is an RIC control header IE, and the fourth information element is an RIC control message IE. The third information element includes at least one of a UE ID corresponding to the network node, a Control style of the control request message, and a control decision of a control action (RIC control decision). The control decision included in the third information element is used to indicate an admission condition of at least one control action in the RIC control message IE. In a specific embodiment of the present disclosure, the control decision of the control action is used to indicate the admission conditions of all the control actions in the RIC control message IE, which belongs to an overall processing mode. The Control style is multiple configuration control, and it is expressed as Control Service Style N as shown in Table 6.

**Table 6: new definition of RIC control header IE**

| IE/Group name | Presence | Range | IE type and reference | Semantic description |
|---|---|---|---|---|
| UE ID | O | | | for identifying a controlled UE |
| Control style | M | | | for indicating Control Service Style N |
| Control decision | O | | For example, (accept) | |

In Table 6, the multiple configuration control is a newly-defined Control service style so as to freely combine the action control for different service styles. Various specific functional service styles to be controlled are combined according to a control demand. Control Service Style N is an index of the multiple configuration control.

To be specific, the fourth information element includes at least one of the followings.
(1) The quantity of Control service styles indicated in the control request message, i.e., the quantity of Insert service styles included in the control request message. It is expressed in the form of a list, i.e., a sequence of Control styles included in the control request message is indicated in a list.
(2) Control styles indicate din the control request message (Indicated Control Style for Multiple Actions), i.e., each Control style included in the control request message. When the sequence of Control styles indicated in the control request message is expressed in the form of a list, the list includes each Control style.
(3) The quantity of control actions included in each Control style. Each Control style corresponds to a plurality of control actions. When the sequence of Control styles indicated in the control request message is expressed in the form of a list, a sequence of control actions corresponding to each Control style is displayed in the list.
(4) Control action ID. Each control action corresponding to each Control style is expressed through a control action ID.
(5) Control decision of the control action (RIC control decision). The control decision is used to indicate an admission condition of one action in the RIC control message IE.
(6) The quantity of RAN parameters for the control action. Each control action has corresponding RAN parameters expressed in the form of a list. The RAN parameters are expressed in the form of a list of RAN parameters for the action requested to be controlled.
(7) RAN parameter ID. The RAN parameter corresponding to each control action is identified through the RAN parameter ID.
(8) RAN parameter value type.

It should be appreciated that, the RIC control message IE is expressed in the form of a list, i.e., control information about a plurality of actions for different service styles forms a list, e.g., a sequence of Control styles, and the list includes each Control service style, the control action included in each Control service style, and the RAN parameter corresponding to each control action. The quantity of Control service styles in the list is a numerical range, e.g., from 1 to the maximum quantity of Control service styles. The quantity of control actions is a numerical range, e.g., from 1 to the maximum quantity of control actions. The quantity of RAN parameters is a numerical range, e.g., from 1 to the maximum quantity of RAN parameters associated with the action. The fourth information element is shown in Table 7.

**Table 7: new definition of RIC control message IE**

| IE/Group name | Presence | Range | IE type and reference | Semantic description |
|---|---|---|---|---|
| Sequence of Control styles | | 1 to (the maximum quantity of Control styles) | | |
| >Control style | M | | | |
| >Sequence of Control actions | | 1 to (the maximum quantity of Control actions) | | |
| >>Control action ID | M | | | |
| >>Control decision | O | | For example, (accept, reject) | |
| >>List of RAN parameters | | 1 to (the maximum quantity of associated RAN parameters) | | |
| >>>RAN parameter ID | M | | | |
| >>>RAN parameter value type | M | | | |

In Table 7, "RAN parameter ID" and "RAN parameter value type" are next layers of "list of RAN parameters". The RAN parameter ID includes an ID of each RAN parameter, and the RAN parameter value type includes a type of each RAN parameter value. For the quantity of RAN parameters, a constraint range of the quantity of RAN parameters is given.

Table 7 shows range constraints of the quantity of control actions and the quantity of RAN parameters. Table 8 shows the definition of each range constraint.

**Table 8**

| Range constraint | Description |
|---|---|
| The maximum quantity of Control styles | The maximum quantity of Control styles supported by an RAN function, having a value of (63) |
| The maximum quantity of associated RAN parameters | The maximum quantity of RAN parameters supported by the RAN function for a specific control action, having a value of (65535) |
| The maximum quantity of control actions | The maximum quantity of control actions supported by the RAN function, having a value of (65535) |

In Table 7, the sequence of Control styles in the RIC control message indicates the other controlled Control styles in the Control style N. Each indicated Control style supports a plurality of control actions, and each control action is identified through a control action ID. For each control action, the RIC control decision indicates whether or not a control action indicated through the Insert indication ID carried in an indication message is admitted when the control action services as a reply to the Insert service. The list of RAN parameters includes configuration parameters probably carried under the control action. Especially, when the RIC control decision is "reject", it means that the control action is not admitted by the Near-RT RIC, and the RAN parameters are not carried.

In Step 6.2, the control acknowledgement message includes at least one of the followings.
(1) The quantity of Control styles included in the control acknowledgement message. It is expressed in the form of a list, i.e., a sequence of Control styles for a plurality of service styles is displayed in a list.
(2) Control style included in the control acknowledgement message (indicated Control style), i.e., each Control style included in the control acknowledgement message. When the sequence of Control styles is expressed in a list, the list includes each insert style.
(3) The quantity of execution outcomes included in the control acknowledgement message, i.e., the quantity of execution outcomes of a plurality of actions included in the control acknowledgement message. When the sequence of Control styles is expressed in the list, a sequence of control actions outcome is displayed in the list.
(4) Control action ID. Each control action corresponding to each Control style is expressed through a control action ID.
(5) The quantity of RAN parameters. Each control action has corresponding RAN parameters expressed in the format of a sequence of RAN parameters.
(6) RAN parameter ID. The RAN parameters corresponding to each control action are identified through RAN parameter IDs.
(7) RAN parameter value type.

In the embodiments of the present disclosure, the control acknowledgement message includes one or more of the above-mentioned pieces of information. The plurality of service styles and the control actions corresponding to each service style in the control acknowledgement message are expressed in the form of a list, e.g., a sequence of Control styles as shown in Table 9.

**Table 9: new definition of control outcome**

| IE/Group name | Presence | Range | IE type and reference | Semantic description |
|---|---|---|---|---|
| Sequence of Control styles | | 1 to (the maximum quantity of service styles) | | |
| >Control style | M | | | |
| >The quantity of | | 1 to (the maximum | | |
| execution outcomes | | quantity of control actions) | | |
| >>Control action ID | M | | | |
| >>Sequence of RAN parameters | | 1 to (the maximum quantity of RAN parameters) | | |
| >>>RAN parameter ID | M | | | |
| >>>RAN parameter value type | M | | | |

In Step 6, in a possible embodiment of the present disclosure, with respect to each control action, when the network node accepts to execute a certain control action, the sequence of RAN parameters carries a received timestamp of the control action. When the network node does not support a certain control action, the sequence of RAN parameters does not need to include its control action ID and relevant parameters.

For example, considering the xApp MIMO characteristic, it is stipulated that, the Control process is considered to be performed successfully when all the control actions have been executed and take effect, and at this time feedback is given through the control acknowledgement message (RIC control acknowledge); and the Control process is considered to be performed unsuccessfully in the other cases, and at this time, feedback is given through an RIC control failure message.

The above-mentioned Steps 1 to 6 are the Control process triggered by Insert. For the Control process triggered by Insert, an Insert service process is an input of the xApp. In order to achieve the multiple action integration control for different service styles in the xApp, in an Insert service subscription process, each action is configured as the multiple action integration control for different service types according to the practical need. For example, the Insert style indicated in the Insert indication message in Step 5 is configured as Insert Style M, i.e., a multiple configuration control request. Correspondingly, the Control service process is an output of the xApp. In order to achieve the multiple action integration control for different service types in the xApp, in the Control service Control process, the integration control of a plurality of actions for different service types is performed synchronously. For example, the Control style indicated in the control request message in Step 6 is Control Style N, i.e., multiple configuration control. Modes for defining the Insert style and the Control style will be described hereinafter.

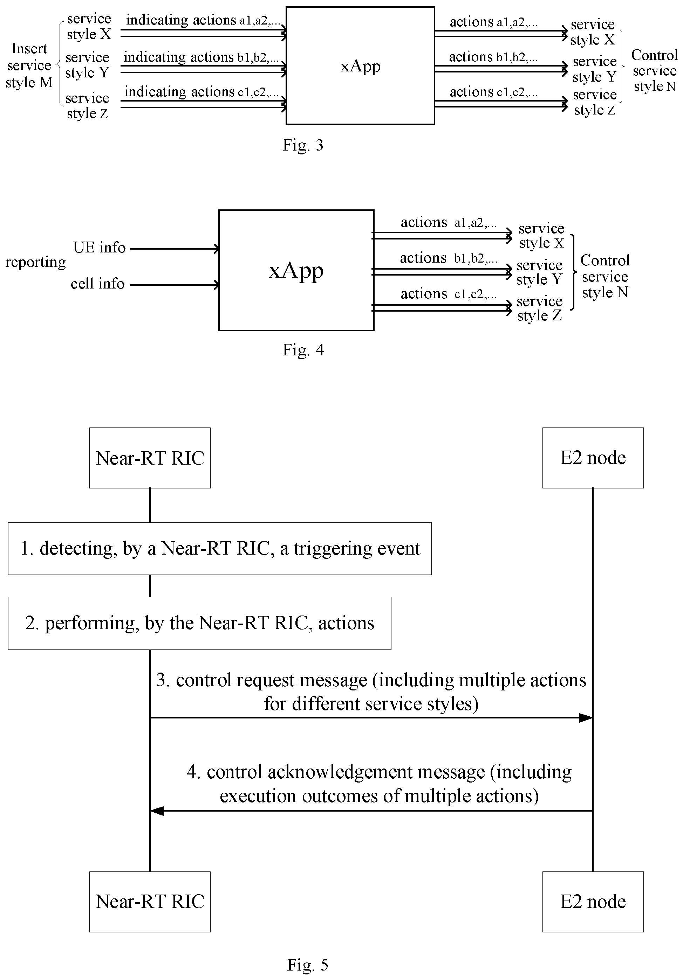

When the service styles include Style X, Style Y and Style Z, Style X includes indication actions a1 and a2, Style Y includes indication actions b1 and b2, and Style Z includes indication actions c1 and c2. As shown in Fig. 3, in order to process the MIMO of the xAPP loaded in the Near-RT RIC, it is necessary to perform multiple action integration control for different service types on the input (i.e., Insert) and output (i.e., Control), i.e., synchronously collect the indication actions a1, a2, b1, b2, c1 and c2, and then synchronously output control actions a1, a2, b1, b2, c1 and c2. Insert and Control processes in an E2 interface need to be optimized, so as to meet the requirement on the xApp MIMO processing.

In the subscription process of the Insert service, each Insert action is configured as the multiple action integration control for different service types according to the practical need. Correspondingly, the Near-RT RIC configures a corresponding Control process jointly for multiple actions for a plurality of Insert service styles, so as to synchronously configure the multiple actions for a plurality of Control service styles as well as the corresponding parameters, thereby to flexibly configure and optimize the RAN resources.

As shown in Table 10, in E2SM-RC, a plurality of Insert styles is provided for the Insert service in accordance with functional categories. In order to flexibly combine various Insert styles and the corresponding Insert indication actions for different functional categories, a new Insert style M, i.e., a multiple configuration control request, is presented on an E2SM-RC level. It should be appreciated that, in order to prevent the extension of the service style from being limited, an index of the Insert style is set as M, as shown in Fig. 3. A value of M is selected in accordance with indices of the other Insert styles.

In the Insert service process, a plurality of specific functional service styles (e.g., Insert styles 1 to 7 in Table 10) and Insert indication actions supported by these service styles are combined through Insert style M according to the practical need. The other Insert styles are carried in a message mode of Insert style M, so as to implement the integration synchronization configuration.

**Table 10: Insert Style List**

| RIC Style Type | Style Name |
|---|---|
| 1 | Radio Bearer Control Request |
| 2 | Radio Resource Allocation Control Request |
| 3 | Connected Mode Mobility Control Request |
| 4 | Radio Access Control Request |
| 5 | Dual Connectivity Control Request |
| 6 | Carrier Aggregation Control Request |
| 7 | Idle Mode Mobility Control Request |
| ... | ... |
| M | Multiple Configuration Control Request |

Correspondingly, in the E2SM-RC, a plurality of Control styles is also provided for the Control services in accordance with functional categories. In order to randomly combine the Control services for different functional categories, a new Control style N, i.e., multiple configuration control, is presented for the Control service, as shown in Table 11. It should be appreciated that, an index of the Control style is set as N, as shown in Fig. 3. A value of N is selected in accordance with indices of the other Control styles.

**Table 11: Control Style List**

| RIC Style Type | Style Name |
|---|---|
| 1 | Radio Bearer control |
| 2 | Radio resource allocation control |
| 3 | Connected mode mobility control |
| 4 | Radio access control |
| 5 | Dual connectivity control |
| 6 | Carrier Aggregation control |
| 7 | Idle mode mobility control |
| 8 | UE information and assignment |
| ... | ... |
| N | Multiple Configurations Control |

In the Control process, a plurality of specific functional service styles (e.g., Control styles 1 to 8 in Table 11) and Control actions supported by these service styles are combined through Control style M according to the practical need. The other Control styles to be controlled are carried in a message mode of Control style N, so as to flexibly configure the combination of the service styles and the corresponding actions, thereby to extend an optimization process of the Near-RT RIC and improve the optimization capability. At the E2 node, the synchronization process is optimized once in accordance with the integration configuration of the multiple actions for different service styles, so as to reduce a processing delay and improve the quality of the collected data. In addition, it is able to be adapted to the MIMO characteristic of the xApp, and improve the intelligent control capability as well as an intelligent control effect. The base station synchronously processes and executes an integration control instruction from the xApp, without any rollback or reconfiguration due to a fault probably generated in a single, sequential execution process, so it is able to reduce the additional processing complexity in such processing as fault processing or reconfiguration, thereby to improve the resource configuration efficiency.

The implementation of the control method for the Control process triggered by the Insert service will be described hereinafter.

In the embodiments of the present disclosure, the following cases are supported by the multiple action integration control method for different service styles.

### Case 1: single action for different service styles

(1) Style X: Action x1; and (2) Style Y: Action y1.

### Case 2: a combination of a single action and two actions for different service styles

(1) Style X: Action x1, Action X2; and (2) Style Y: Action y1.

### Case 3: a combination of multiple actions for different service styles

(1) Style X: Action x1, Action x2; and (2) Style Y: Action y1, Action y2.

With respect to a QoS optimization case, it is able to achieve the radio bearer integration control and the radio access integration control, i.e., it is able to synchronously configure a mapping relationship between DRB parameters and QoS flows, and configure the UE access control.

An input of the process is relevant contents carried in the Insert service, i.e., a Control request command triggered by Insert and initiated by the Near-RT RIC, the Insert style M is adopted, and key information elements included in the insert indication message are shown in Table 12.

**Table 12: specific contents of RIC indication header for Insert service**

| IE | Value | Description |
|---|---|---|
| UE ID | presumed that the E2 Node is a gNB connected to a 5GC as a whole, a value is AMF UE NGAP ID+GUAMI, optionally RAN UE ID | a designated UE ID |
| RIC Insert Style Type | M | Multiple Configurations Control Request |

Specific contents of the RIC indication message are shown in Table 13. Table 13: specific contents of RIC indication message for Insert service

| Parameter | Value | Description |
|---|---|---|
| Sequence of indicated insert styles | | presumed that two Insert styles are configured synchronously |
| >Indicated Insert style | 1 | radio bearer control request |
| >Sequence of Insert indication action definition | | a plurality of Insert actions is supported to be configured |
| >> Insert action ID | 1 | DRB QoS configuration request |
| >>List of RAN parameters | | parameters of the action |
| ... | | |
| >>Insert action ID | 2 | QoS flow mapping configuration request |
| ... | | |
| > Indicated Insert style | 4 | radio access control request |
| >Sequence of Insert indication action definition | | |
| >>Insert action ID | 1 | the control is admitted by the UE |
| >>List of RAN parameters | | |
| ... | | |

As shown in Table 13, in the indication message, two Insert styles are configured synchronously, i.e., Style 1: Radio Bearer Control and Style 4: Radio Access Control. Each Insert style is configured with a plurality of indication actions, and each Insert indication action requested to be configured includes parameters requested to be configured. For example, for Style 1: Radio Bearer Control, two actions DRB QoS configuration and QoS Flow mapping are configured synchronously, and each action includes configured parameters. For Style 4: Radio Access Control, one action is configured, i.e., UE Admission Control.

In the Control process triggered by the Insert, a corresponding configuration value is given in accordance with a control action requested in the Insert message, and specific contents (part) of the RIC control message are shown in Table 14. As compared with the Control process triggered by the Near-RT RIC, for each control action, the RIC control decision indicates whether or not the control action requested in the Insert is admitte4d. When it is not admitted, the RIC control decision is set as "reject", and no RAN parameter needs to be carried.

**Table 14: a part of contents in the RIC control message in the Control process triggered by Insert**

| Parameter | Value | Description |
|---|---|---|
| Sequence of Control styles | | a group of controlled Control styles |
| >Indicated Control style | 1 | radio bearer control |
| >Sequence Control actions | | presumed that two Control actions are included |
| >>Control action ID | 1 | DRB QoS configuration |
| >>RIC Control decision | accept | indicating that the action is accepted |
| >>List of RAN parameters | LIST: x items | configuring a parameter of Control action 1 |
| ... | | |
| >> Control action ID | 2 | QoS flow mapping configuration |
| >>RIC control decision | accept | indicating that the action is accepted |
| >>List of RAN parameters | | configuring a parameter of Control action 2 |
| ...... | | |
| >Indicated Control style | 4 | radio access control |
| >Sequence of Control actions | | presumed that one action is included |
| >>Control action ID | 1 | control is admitted by the UE |
| >>List of RAN parameters | | |
| ... | | |

In the embodiments of the present disclosure, the Control process is triggered by the Insert service. In addition, the Control process may also be triggered by the Near-RT RIC, which will be described hereinafter in conjunction with embodiments.

In a possible embodiment of the present disclosure, the transmitting the control request message to the network node includes, in the case that a triggering event has been detected, transmitting the control request message to the network node. In other words, the Control process is triggered when the triggering event has been detected by the Near-RT RIC.

In the embodiments of the present disclosure, the Control process is an output of the xApp, and an input of the xApp is Report. Presumed that the input is Report in the xApp MIMO processing, the Control process is triggered by the Near-RT RIC as an output, and it is necessary to perform the multiple action integration control for different service styles in the Control process triggered by the Near-RT RIC. When the service styles include Style X, Style Y and Style Z, Style X includes Indication actions a1 and a2, Style Y includes Indication actions b1 and b2, and Style Z includes Indication actions c1 and c2, as shown in Fig. 4. In other words, after collecting reported measurement information from the UE and/or cell, Control actions a1, a2, b1, b2, c1 and c2 are outputted synchronously. It is necessary to optimize the Control process triggered by the Near-RT RIC in the E2 interface, so as to meet the requirement on the xApp MIMO processing.

In the Control process, multiple actions for different service styles are flexibly combined through the Control Style N.

When the Control process is triggered by the Near-RT RIC, the input is a Report-related content, and as shown in Fig. 5, the Control process triggered by the Near-RT RIC includes the following steps.

Step 1: the Near-RT RIC has detected an internal triggering event (the internal triggering event is a relevant RAN resource measurement result obtained in accordance with a report from the E2 node).

Step 2: the Near-RT RIC performs the configuration on a radio resource optimization control instruction in accordance with a specific RRM optimization object.

Step 3: the Near-RT RIC transmits the control request message to the E2 node. The control request message includes relevant information about multiple actions for different service styles. The radio resource optimization is performed on the E2 node in accordance with the control action and the RAN parameters. To be specific, the control request message includes a third information element and a fourth information element. The third information element is an RIC control header IE (as shown in Table 6), and the fourth information element is an RIC control message IE (as shown in Table 7). The third information element includes at least one of a UE ID corresponding to the network node, a Control style of the control request message, or a control decision. The Control style is multiple configuration control expressed as Control Service Style N, which will not be particularly defined herein.

It should be appreciated that, the control instruction is triggered inside the Near-RT RIC, regardless of the Insert process, so it is unnecessary to return the control decision for the Insert action, or carry a Call process ID.

Step 4: the E2 node accepts the control request, returns an execution outcome of multiple control actions in the plurality of Control styles, and transmits an RIC Control Acknowledge message to the Near-RT RIC for subsequent processing. The control acknowledgement message is shown in Table 9, and thus will not be particularly defined herein.

The implementation of the control method for the Control process triggered by the Near-RT RIC will be described hereinafter.

With respect to a QoS optimization case, it is able to achieve the radio bearer integration control and the radio access integration control, i.e., it is able to synchronously configure a mapping relationship between DRB parameters and QoS flows, and configure the UE access control.

Presumed that the input is reported cell/UE-level RAN side information, and A control Request command is initiated independently by the Near-RT RIC, the Insert service process being not involved.
(1) The Control process is started through an internal process of the Near-RT RIC, and the RIC control request message including an RIC request ID, an RAN function ID, an RIC control header and a RIC control message IE are transmitted.

The Control Style N is adopted, and the RIC controller header is shown in Table 15.

**Table 15: specific contents of RIC control header**

| IE | Value | Description |
|---|---|---|
| UE ID | presumed that the E2 node is a gNB connected to a 5GC as a whole, a value is AMF UE NGAP ID+GUAMI, optionally RAN UE ID | a designated UE ID |
| RIC Style Type | N | Multiple Configurations Control |

Specific contents of the RIC control message are shown in Table 16. Table 16: specific contents of RIC control message

| Parameter | Value | Description |
|---|---|---|
| Sequence of Control styles | | a group of controlled Control styles, including two Control styles |
| >Indicated Control style | 1 | radio bearer control |
| >Sequence of control actions | | presumed that two Control actions are included |
| >>Control action ID | 1 | DRB QoS configuration |
| >>List of RAN parameters | LIST: x items | parameters for configuring Control Action 1 |
| ...... | | |
| >>Control action ID | 2 | QoS flow mapping configuration |
| >>List of RAN parameters | | parameters for configuring Control Action 2 |
| ...... | | |
| >Indicated Control style | 4 | radio access control |
| >Sequence of Control actions | | presumed that one Control action is included |
| >>Control action ID | 1 | Control is admitted by the UE |
| >>List of RAN parameters | | |
| ...... | | |

In the Control message, two Control styles are configured, i.e., Style 1: Radio Bearer Control and Style 4: Radio Access Control. For Style 1: Radio Bearer Control, two Control actions DRB QoS configuration and QoS Flow mapping are configured synchronously, and each Control action includes the configured parameters. For Style 4: Radio Access Control, one Control action is configured, i.e., UE Admission Control and a corresponding RAN parameter.

(2) Upon the receipt of the Control Request message, the E2 node determines a target function entity in accordance with the RAN function ID carried in the message, starts a relevant process in accordance with specific control commands and control parameters in the RIC control header and the Control Message, and synchronously performs the relevant control actions, so as to optimize the radio resource configuration. An execution outcome of each Control action under each Control style is returned in accordance with a processing condition of the E2 node.

It should be appreciated that, the Control process triggered by the Insert service and the Control process triggered by the Near-RT RIC have been described hereinabove. The Control process is the output of the xApp, and the input of the xApp is Insert, Report, or both. In addition, the other RIC service process is also used as the input, which will not be particularly defined herein.

It should be appreciated that, in the embodiments of the present disclosure, when an Insert operation for an action corresponding to a target Insert style is requested through the Insert service subscription, a control action for a target Control style corresponding to the target Insert style is performed in the Control service. For example, when the subscription request message includes Style M (multiple configuration control request) in Table 10, a corresponding control action is performed through the Control Style N (multiple configuration control) in the Control service process, i.e., an Insert action requested in the Insert service process corresponds to a control action in the Control service process.

According to the embodiments of the present disclosure, through the multiple action integration control method for different service styles triggered by the Insert or the Near-RT RIC, it is able to optimize the xApp MIMO synchronous integration. Through the multiple action integration configuration method for different service styles in the Insert and Control processes at an E2 interface level as well as the message mechanism, it is able to solve the problem in the related art where it is impossible to achieve the intelligent application integration control because the Insert and Control in radio network intelligent architecture is limited by the division of service styles, prevent the occurrence of a waste of interface resources and a device processing failure caused when a part of actions are interrupted in a Control process completed in a single action sequence, reduce a processing delay of a base station, and reduce the device processing complexity due to the failure processing and reconfiguration, thereby to improve an optimization capability of the Near-RT RIC, and meet the requirements on more cases.

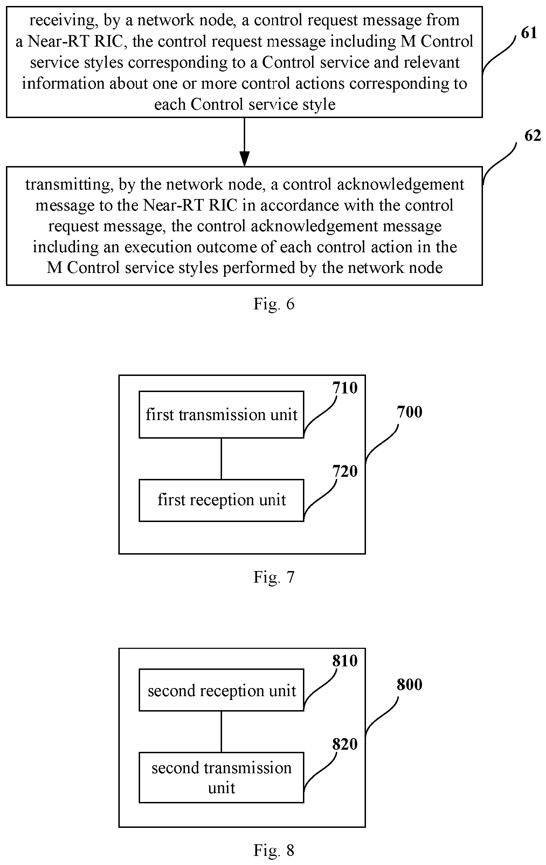

As shown in Fig. 6, the present disclosure further provides in some embodiments a network integration control method for a network node, which includes: Step 61 of receiving, by a network node, a control request message from a Near-RT RIC, the control request message including M Control service styles corresponding to a Control service and relevant information about one or more control actions corresponding to each Control service style; and Step 62 of transmitting, by the network node, a control acknowledgement message to the Near-RT RIC in accordance with the control request message, the control acknowledgement message including an execution outcome of each control action in the M Control service styles performed by the network node, wherein M is an integer greater than or equal to 1.

In the embodiments of the present disclosure, the network node is a network node controlled by the Near-RT RIC. The network node is an E2 node, and the Near-RT RIC controls the E2 node through an E2 interface, so as to optimize the RAN radio resource. To be specific, when controlling the E2 node, the Near-RT RIC transmits the control request message to the E2 node, and the control request message includes the relevant information about a plurality of actions corresponding to a plurality of Control styles.

Upon the receipt of the control request message, the network node returns the execution outcome of each action for different Control styles in the control request message, i.e., transmits the control acknowledgement message to the Near-RT RIC for the subsequent processing.

An xApp is an application loaded in the Near-RT RIC so to achieve an RAN optimization function. In the embodiments of the present disclosure, the action corresponding to the Control service is just an operation outputted by the xApp for controlling the network node. For the xApp, through a plurality of control actions for different service styles included in the control request message and the control acknowledgement message, it is able to synchronously control the plurality of actions once, thereby to be adapted to an MIMO characteristic of the xApp.

According to the embodiments of the present disclosure, the network node receives the control request message from the Near-RT RIC, and the control request message includes the relevant information about the plurality of actions for different service styles. Then, the network node transmits the control acknowledgement message to the Near-RT RIC, and the control acknowledgement message includes the execution outcomes of the actions for different service styles. As a result, it is able to optimize and control the xApp MIMO synchronous integration, prevent the occurrence of a waste of interface resources and a device processing failure caused when a part of actions are interrupted in a Control process completed in a single action sequence, reduce a processing delay of a base station, and reduce the device processing complexity due to the failure processing and reconfiguration, thereby to improve an optimization capability of the Near-RT RIC, and meet the requirements on more cases.

In the embodiments of the present disclosure, the multiple action integration Control process for different service styles is triggered by Insert, or by the Near-RT RIC, which will be described hereinafter in conjunction with specific embodiments.

In a possible embodiment of the present disclosure, when the Control process is triggered by Insert, the Near-RT RIC transmits a subscription request message to the network node for subscribing an Insert service. At this time, the method further includes: receiving, by the network node, the subscription request message from the Near-RT RIC, the subscription request message including action definition about one or more Insert actions corresponding to subscribed M Insert service styles; and transmitting an Insert indication message to the Near-RT RIC, the Insert indication message including relevant information about the Insert actions corresponding to the M Insert service styles.

In the embodiments of the present disclosure, before the execution of the Control process, the Near-RT RIC subscribes to the network node an Insert service including a plurality of actions corresponding to a plurality of service styles. The subscription information includes relevant information about a plurality of Insert actions corresponding to the subscribed service, e.g., action definition about an Insert action or a triggering event for the Insert action, and the plurality of actions belongs to different service styles. The action definition (e.g., Insert Indication Actions) is used to indicate a content to be indicated in the Insert inaction message for the plurality of actions.

Upon the receipt of the subscription request message, detects whether there is a triggering event. When the triggering event has been detected, the network node stops a currently-performed operation, executes the requested Insert service, and transmits the Insert indication message to the Near-RT RIC. The Insert indication message includes the relevant information about the plurality of Insert actions for different service styles. In this way, it is able to request the Near-RT RIC to control and optimize multiple actions for different service styles, thereby to provide the Insert service and the Control service for multiple actions belonging to different service styles.

When the Control process is triggered by the Insert service, as shown in Fig. 2, the control method includes the following steps.

Step 1: at first, the Near-RT RIC subscribes an Insert service, i.e., transmits a subscription request message (RIC Subscription Request) to the E2 node, so as to provide subscription-related information. The subscription request message includes multiple actions for different service styles.

In a possible embodiment of the present disclosure, the action definition includes at least one of the quantity of requested Insert service styles, requested Insert service styles, the quantity of Insert Actions included in each Insert service style, an Insert action ID, the quantity of RAN parameters for the Insert actions, or an RAN parameter ID.

Step 2: the E2 node transmits a subscription response to the Near-RT RIC in accordance with the subscription request message. The subscription response includes actions admitted by the E2 node, e.g., a list of admitted actions (including an ID of each admitted action).

Step 3: the E2 node performs a corresponding Insert operation in accordance with multiple action information for different service styles in the subscription request message, i.e., detects a triggering event.

Step 4: after the E2 node has detected a corresponding triggering event, e.g., a radio resource (e.g., UE context or bearer context) changes or needs to be established, the E2 node pauses a currently-performed normal function process.

Step 5: the E2 node triggers a corresponding Insert indication message in accordance with an indication in the action definition. The Insert indication message carries multiple actions for different service styles, so as to request the Near-RT RIC to optimize and control an original process of the E2 node. In a possible embodiment of the present disclosure, the Insert indication message includes a first information element and a second information element. The first information element includes at least one of a UE ID corresponding to the network node, an Insert type of the Insert indication message or an event trigger condition ID. The second information element includes at least one of the quantity of Insert service styles indicated in the Insert indication message, the Insert service styles indicated in the Insert indication message, the quantity of Insert actions included in each Insert service style, an Insert action ID, the quantity of RAN parameters for the Insert actions, an RAN parameter ID, or an RAN parameter value type.

Step 6: the Near-RT RIC optimizes and controls an original process of the E2 node in accordance with a synchronous configuration request in the Insert indication message, and a Control service includes an integration control combination of multiple actions for different service styles.

To be specific, Step 6 includes the following steps.

Step 6.1: the Near-RT RIC transmits the control request message to the network node in accordance with the Insert indication message, and the network node receives the control request message from the Near-RT RIC.

In a possible embodiment of the present disclosure, the control request message includes a third information element and a fourth information element. The third information element includes at least one of a UE ID corresponding to the network node, a Control style of the control request message, or a control decision. The fourth information element includes at least one of the quantity of Control service styles indicated in the control request message, the Control service styles indicated in the control request message, the quantity of control actions included in each Control service style, a control action ID, a control decision of the control action, the quantity of RAN parameters for the control action, an RAN parameter ID, or an RAN parameter value type.

Step 6.2: the network node transmits the control acknowledgement message to the Near-RT RIC, i.e., the E2 node accepts the control request, returns an execution outcome of each control action in multiple actions corresponding to a plurality of Control styles, and transmits the RIC Control Acknowledge message to the Near-RT RIC for subsequent processing.

In a possible embodiment of the present disclosure, the control acknowledgement message includes at least one of the quantity of Control service styles included in the control acknowledgement message, the Control service styles included in the control acknowledgement message, the quantity of execution outcomes included in the control acknowledgement message, a control action ID, the quantity of RAN parameters, an RAN parameter ID, or an RAN parameter value type.

The above-mentioned Steps 1 to 6 are the Control process triggered by Insert. For the Control process triggered by Insert, an Insert service process is an input of the xApp. In order to achieve the multiple action integration control for different service styles in the xApp, in an Insert service subscription process, each action is configured as the multiple action integration control for different service types according to the practical need. For example, the Insert style indicated in the Insert indication message in Step 5 is configured as Insert Style M, i.e., a multiple configuration control request. Correspondingly, the Control service process is an output of the xApp. In order to achieve the multiple action integration control for different service types in the xApp, in the Control service Control process, the integration control of a plurality of actions for different service types is performed synchronously. For example, the Control style indicated in the control request message in Step 6 is Control Style N, i.e., multiple configuration control.

In a possible embodiment of the present disclosure, the Control process is further triggered by the Near-RT RIC, i.e., the Control process is triggered when the Near-RT RIC has detected a triggering event. As shown in Fig. 5, the Control process includes the following steps.

Step 1: the Near-RT RIC has detected an internal triggering event (the internal triggering event is a relevant RAN resource measurement result obtained in accordance with a report from the E2 node).

Step 2: the Near-RT RIC performs the configuration on a radio resource optimization control instruction in accordance with a specific RRM optimization object.

Step 3: the Near-RT RIC transmits the control request message to the E2 node. The control request message includes relevant information about multiple actions for different service styles. The radio resource optimization is performed on the E2 node in accordance with the control action and the RAN parameters.

Step 4: the E2 node accepts the control request, returns an execution outcome of multiple control actions in the plurality of Control styles, and transmits an RIC Control Acknowledge message to the Near-RT RIC for subsequent processing.

According to the embodiments of the present disclosure, the network node receives the control request message from the Near-RT RIC, and the control request message includes the relevant information about the plurality of actions for different service styles. Then, the network node transmits the control acknowledgement message to the Near-RT RIC, and the control acknowledgement message includes the execution outcomes of the actions for different service styles. As a result, it is able to optimize and control the xApp MIMO synchronous integration, prevent the occurrence of a waste of interface resources and a device processing failure caused when a part of actions are interrupted in a Control process completed in a single action sequence, reduce a processing delay of a base station, and reduce the device processing complexity due to the failure processing and reconfiguration, thereby to improve an optimization capability of the Near-RT RIC, and meet the requirements on more cases.

It should be appreciated that, the implementation of the network integration control method for the network node may refer to that of the network integration control method for the Near-RT RIC with a same technical effect, which will not be particularly defined herein.

The network integration control method has been described hereinabove, and a corresponding device will be described hereinafter in conjunction with the embodiments and drawings.

As shown in Fig. 7, the present disclosure provides in some embodiments a network integration control device 700 for a Near-RT RIC, which includes: a first transmission unit 710 configured to transmit a control request message to a network node, the control request message including M Control service styles corresponding to a Control service and relevant information about one or more control actions corresponding to each Control service style; and a first reception unit 720 configured to receive a control acknowledgement message from the network node, the control acknowledgement message including an execution outcome of each control action in the M Control service styles performed by the network node, wherein M is an integer greater than or equal to 1.

In a possible embodiment of the present disclosure, the device further includes: a third transmission unit configured to transmit a subscription request message for subscribing an Insert service to the network node, the subscription request message including action definition about one or more Insert actions corresponding to subscribed M Insert service styles; and a third reception unit configured to receive an Insert indication message from the network node, the Insert indication message including relevant information about the Insert actions corresponding to the M Insert service styles.

In a possible embodiment of the present disclosure, the action definition includes at least one of the quantity of requested Insert service styles, requested Insert service styles, the quantity of Insert Actions included in each Insert service style, an Insert action ID, the quantity of RAN parameters for the Insert actions, or an RAN parameter ID.

In a possible embodiment of the present disclosure, the Insert indication message includes a first information element and a second information element, the first information element includes at least one of a UE ID corresponding to the network node, an Insert type of the Insert indication message or an event trigger condition ID, and the second information element includes at least one of the quantity of Insert service styles indicated in the Insert indication message, the Insert service styles indicated in the Insert indication message, the quantity of Insert actions included in each Insert service style, an Insert action ID, the quantity of RAN parameters for the Insert actions, an RAN parameter ID, or an RAN parameter value type.

In a possible embodiment of the present disclosure, the Insert type is a multiple configuration control request.

In a possible embodiment of the present disclosure, the first transmission unit is specifically configured to transmit the control request message to the network node in accordance with the Insert indication message.

In a possible embodiment of the present disclosure, the control request message includes a third information element and a fourth information element, the third information element includes at least one of a UE ID corresponding to the network node, a Control style of the control request message, or a control decision, and the fourth information element includes at least one of the quantity of Control service styles indicated in the control request message, the Control service styles indicated in the control request message, the quantity of control actions included in each Control service style, a control action ID, a control decision of the control action, the quantity of RAN parameters for the control action, an RAN parameter ID, or an RAN parameter value type.

**In** a possible embodiment of the present disclosure, the control decision is used to indicate an admission condition about at least one control action in an RIC control message information element.

**In** a possible embodiment of the present disclosure, the Control style is multiple configuration control.

**In** a possible embodiment of the present disclosure, the control acknowledgement message includes at least one of the quantity of Control service styles included in the control acknowledgement message, the Control service styles included in the control acknowledgement message, the quantity of execution outcomes included in the control acknowledgement message, a control action ID, the quantity of RAN parameters, an RAN parameter ID, or an RAN parameter value type.

**In** a possible embodiment of the present disclosure, the first transmission unit is specifically configured to, in the case that a triggering event has been detected, transmit the control request message to the network node.

Here, it should be appreciated that, the above-mentioned device is used to implement the steps of the method for the Near-RT RIC with a same technical effect, which will not be particularly defined herein.

As shown in Fig. 8, the present disclosure provides in some embodiments a network integration control device 800 for a network node. The network node is an E2 node. The network integration control device 800 includes: a second reception unit 810 configured to receive a control request message from a Near-RT RIC, the control request message including M Control service styles corresponding to a Control service and relevant information about one or more control actions corresponding to each Control service style; and a second transmission unit 820 transmit a control acknowledgement message to the Near-RT RIC in accordance with the control request message, the control acknowledgement message including an execution outcome of each control action in the M Control service styles performed by the network node, wherein M is an integer greater than or equal to 1.

In a possible embodiment of the present disclosure, the device further includes: a fourth reception unit configured to receive a subscription request message from the Near-RT RIC, the subscription request message including action definition about one or more Insert actions corresponding to subscribed M Insert service styles; and a fourth transmission unit configured to transmit an Insert indication message to the Near-RT RIC, the Insert indication message including relevant information about the Insert actions corresponding to the M Insert service styles.

In a possible embodiment of the present disclosure, the action definition includes at least one of the quantity of requested Insert service styles, requested Insert service styles, the quantity of Insert Actions included in each Insert service style, an Insert action ID, the quantity of RAN parameters for the Insert actions, or an RAN parameter ID.

In a possible embodiment of the present disclosure, the Insert indication message includes a first information element and a second information element, the first information element includes at least one of a UE ID corresponding to the network node, an Insert type of the Insert indication message or an event trigger condition ID, and the second information element includes at least one of the quantity of Insert service styles indicated in the Insert indication message, the Insert service styles indicated in the Insert indication message, the quantity of Insert actions included in each Insert service style, an Insert action ID, the quantity of RAN parameters for the Insert actions, an RAN parameter ID, or an RAN parameter value type.

In a possible embodiment of the present disclosure, the Insert type is a multiple configuration control request.

In a possible embodiment of the present disclosure, the control request message includes a third information element and a fourth information element, the third information element includes at least one of a UE ID corresponding to the network node, a Control style of the control request message, or a control decision, and the fourth information element includes at least one of the quantity of Control service styles indicated in the control request message, the Control service styles indicated in the control request message, the quantity of control actions included in each Control service style, a control action ID, a control decision of the control action, the quantity of RAN parameters for the control action, an RAN parameter ID, or an RAN parameter value type.

In a possible embodiment of the present disclosure, the control decision is used to indicate an admission condition about at least one control action in an RIC control message information element.

In a possible embodiment of the present disclosure, the Control style is multiple configuration control.

In a possible embodiment of the present disclosure, the control acknowledgement message includes at least one of the quantity of Control service styles included in the control acknowledgement message, the Control service styles included in the control acknowledgement message, the quantity of execution outcomes included in the control acknowledgement message, a control action ID, the quantity of RAN parameters, an RAN parameter ID, or an RAN parameter value type.

Here, it should be appreciated that, the above-mentioned device is used to implement the steps of the above-mentioned method for the network node with a same technical effect, which will not be particularly defined herein.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

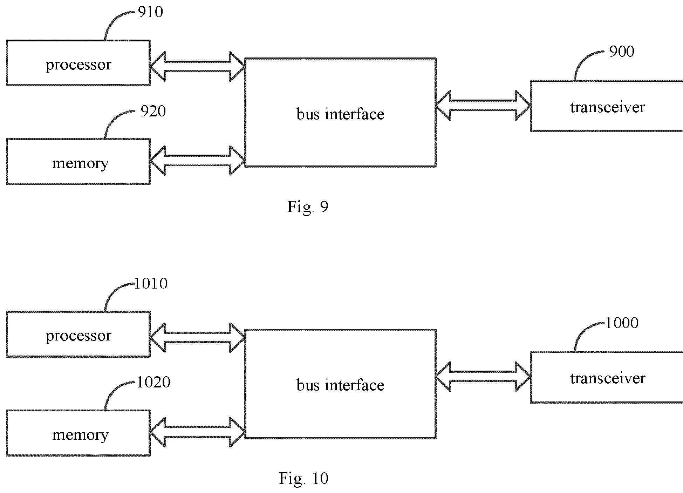

As shown in Fig. 9, the present disclosure further provides in some embodiments a network integration control device for a Near-RT RIC, which includes a memory 920, a transceiver 900 and a processor 910. The memory 920 is configured to store therein a computer program, and the processor 910 is configured to read the computer program in the memory 920. The transceiver 900 is configured to receive and transmit data under the control of the processor 910, so as to: transmit a control request message to a network node, the control request message including M Control service styles corresponding to a Control service and relevant information about one or more control actions corresponding to each Control service style; and receive a control acknowledgement message from the network node, the control acknowledgement message including an execution outcome of each control action in the M Control service styles performed by the network node, wherein M is an integer greater than or equal to 1.

In a possible embodiment of the present disclosure, the transceiver is further configured to: transmit a subscription request message for subscribing an Insert service to the network node, the subscription request message including action definition about one or more Insert actions corresponding to subscribed M Insert service styles; and receive an Insert indication message from the network node, the Insert indication message including relevant information about the Insert actions corresponding to the M Insert service styles.

In a possible embodiment of the present disclosure, the action definition includes at least one of the quantity of requested Insert service styles, requested Insert service styles, the quantity of Insert Actions included in each Insert service style, an Insert action ID, the quantity of RAN parameters for the Insert actions, or an RAN parameter ID.

In a possible embodiment of the present disclosure, the Insert indication message includes a first information element and a second information element, the first information element includes at least one of a UE ID corresponding to the network node, an Insert type of the Insert indication message or an event trigger condition ID, and the second information element includes at least one of the quantity of Insert service styles indicated in the Insert indication message, the Insert service styles indicated in the Insert indication message, the quantity of Insert actions included in each Insert service style, an Insert action ID, the quantity of RAN parameters for the Insert actions, an RAN parameter ID, or an RAN parameter value type.

In a possible embodiment of the present disclosure, the control decision is used to indicate an admission condition about at least one control action in an RIC control message information element.

In a possible embodiment of the present disclosure, the Insert type is a multiple configuration control request.

In a possible embodiment of the present disclosure, the transceiver is further configured to transmit the control request message to the network node in accordance with the Insert indication message.

In a possible embodiment of the present disclosure, the control request message includes a third information element and a fourth information element, the third information element includes at least one of a UE ID corresponding to the network node, a Control style of the control request message, or a control decision, and the fourth information element includes at least one of the quantity of Control service styles indicated in the control request message, the Control service styles indicated in the control request message, the quantity of control actions included in each Control service style, a control action ID, a control decision of the control action, the quantity of RAN parameters for the control action, an RAN parameter ID, or an RAN parameter value type.

In a possible embodiment of the present disclosure, the control decision is used to indicate an admission condition about at least one control action in an RIC control message information element.

In a possible embodiment of the present disclosure, the Control style is multiple configuration control.

In a possible embodiment of the present disclosure, the control acknowledgement message includes at least one of the quantity of Control service styles included in the control acknowledgement message, the Control service styles included in the control acknowledgement message, the quantity of execution outcomes included in the control acknowledgement message, a control action ID, the quantity of RAN parameters, an RAN parameter ID, or an RAN parameter value type.

In a possible embodiment of the present disclosure, the transceiver is configured to, in the case that a triggering event has been detected, transmit the control request message to the network node.

According to the embodiments of the present disclosure, the control request message transmitted by the Near-RT RIC to the network node controlled by the Near-RT RIC includes the relevant information about a plurality of control actions for a plurality of service styles, and the control acknowledgement message transmitted by the network node to the Near-RT RIC includes the execution outcomes of the plurality of actions for the plurality of service styles. As a result, it is able to optimize and control the xApp MIMO synchronous integration, prevent the occurrence of a waste of interface resources and a device processing failure caused when a part of actions are interrupted in a Control process completed in a single action sequence, reduce a processing delay of a base station, and reduce the device processing complexity due to the failure processing and reconfiguration, thereby to improve an optimization capability of the Near-RT RIC, and meet the requirements on more cases.

In Fig. 9, bus architecture may include a number of buses and bridges connected to each other, so as to connect various circuits for one or more processors 910 and one or more memories 920. In addition, as is known in the art, the bus architecture may be used to connect any other circuits, such as a circuit for a peripheral device, a circuit for a voltage stabilizer and a power management circuit. A bus interface may be provided, and the transceiver 900 may consist of a plurality of elements, i.e., a transmitter and a receiver for communication with any other devices over a transmission medium. The processor 910 may take charge of managing the bus architecture as well as general processings. The memory 920 may store therein data for the operation of the processor 910.

The processor 910 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

Here, it should be appreciated that, the above-mentioned device is used to implement the steps of the above-mentioned method for the Near-RT RIC with a same technical effect, which will not be particularly defined herein.

As shown in Fig. 10, the present disclosure further provides in some embodiments a network integration control device for a network node. The network node is an E2 node. The network integration control device includes a memory, a transceiver 1000 and a processor 1010. The memory 1020 is configured to store therein a computer program, and the processor 1010 is configured to read the computer program in the memory 1020. The transceiver 1000 is configured to receive and transmit data under the control of the processor 1010, so as to: receive a control request message from a Near-RT RIC, the control request message including M Control service styles corresponding to a Control service and relevant information about one or more control actions corresponding to each Control service style; and transmit a control acknowledgement message to the Near-RT RIC in accordance with the control request message, the control acknowledgement message including an execution outcome of each control action in the M Control service styles performed by the network node, wherein M is an integer greater than or equal to 1.

In a possible embodiment of the present disclosure, the transceiver is further configured to: receive a subscription request message from the Near-RT RIC, the subscription request message including action definition about one or more Insert actions corresponding to subscribed M Insert service styles; and transmit an Insert indication message to the Near-RT RIC, the Insert indication message including relevant information about the Insert actions corresponding to the M Insert service styles.

In a possible embodiment of the present disclosure, the action definition includes at least one of the quantity of requested Insert service styles, requested Insert service styles, the quantity of Insert Actions included in each Insert service style, an Insert action ID, the quantity of RAN parameters for the Insert actions, or an RAN parameter ID.

In a possible embodiment of the present disclosure, the Insert indication message includes a first information element and a second information element, the first information element includes at least one of a UE ID corresponding to the network node, an Insert type of the Insert indication message or an event trigger condition ID, and the second information element includes at least one of the quantity of Insert service styles indicated in the Insert indication message, the Insert service styles indicated in the Insert indication message, the quantity of Insert actions included in each Insert service style, an Insert action ID, the quantity of RAN parameters for the Insert actions, an RAN parameter ID, or an RAN parameter value type.

In a possible embodiment of the present disclosure, the Insert type is a multiple configuration control request.

In a possible embodiment of the present disclosure, the control request message includes a third information element and a fourth information element, the third information element includes at least one of a UE ID corresponding to the network node, a Control style of the control request message, or a control decision, and the fourth information element includes at least one of the quantity of Control service styles indicated in the control request message, the Control service styles indicated in the control request message, the quantity of control actions included in each Control service style, a control action ID, a control decision of the control action, the quantity of RAN parameters for the control action, an RAN parameter ID, or an RAN parameter value type.

In a possible embodiment of the present disclosure, the control decision is used to indicate an admission condition about at least one control action in an RIC control message information element.

In a possible embodiment of the present disclosure, the Control style is multiple configuration control.

In a possible embodiment of the present disclosure, the control acknowledgement message includes at least one of the quantity of Control service styles included in the control acknowledgement message, the Control service styles included in the control acknowledgement message, the quantity of execution outcomes included in the control acknowledgement message, a control action ID, the quantity of RAN parameters, an RAN parameter ID, or an RAN parameter value type.

According to the embodiments of the present disclosure, the network node receives the control request message from the Near-RT RIC, and the control request message includes the relevant information about the plurality of actions for different service styles. Then, the network node transmits the control acknowledgement message to the Near-RT RIC, and the control acknowledgement message includes the execution outcomes of the actions for different service styles. As a result, it is able to optimize and control the xApp MIMO synchronous integration, prevent the occurrence of a waste of interface resources and a device processing failure caused when a part of actions are interrupted in a Control process completed in a single action sequence, reduce a processing delay of a base station, and reduce the device processing complexity due to the failure processing and reconfiguration, thereby to improve an optimization capability of the Near-RT RIC, and meet the requirements on more cases.

In Fig. 10, bus architecture may include a number of buses and bridges connected to each other, so as to connect various circuits for one or more processors 1010 and one or more memories 1020. In addition, as is known in the art, the bus architecture may be used to connect any other circuits, such as a circuit for a peripheral device, a circuit for a voltage stabilizer and a power management circuit. A bus interface may be provided, and the transceiver 1000 may consist of a plurality of elements, i.e., a transmitter and a receiver for communication with any other devices over a transmission medium. The processor 1010 may take charge of managing the bus architecture as well as general processings. The memory 1020 may store therein data for the operation of the processor 1010.

The processor 1010 is a CPU, an ASIC, an FPGA or a CPLD. The processor may also use multi-core architecture.

Here, it should be appreciated that, the above-mentioned device is used to implement the steps of the above-mentioned method for the network node with a same technical effect, which will not be particularly defined herein.

The present disclosure further provides in some embodiments a processor-readable storage medium storing therein a computer program. The computer program is executed by a processor so as to implement the above-mentioned network integration control method with a same technical effect, which will not be particularly defined herein. The processor-readable storage medium is any available medium or data storage device capable of being accessed by the processor, which includes, but not limited to, a magnetic memory (e.g., floppy disk, hard disk, magnetic tape, or Magnetic Optical disk (MO)), an optical memory (e.g., Compact Disk (CD), Digital Versatile Disk (DVD), Blue-ray Disk (BD), or High-definition Versatile Disk (HVD)), or a semiconductor memory (e.g., Read-Only Memory (ROM), Electrically Programmable ROM (EPROM), Electrically Erasable PROM (EEPROM), NAND flash, or Solid-State Disk or Solid State Drive (SSD)).

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be further appreciated that, the above modules in the network device and the UE are divided merely on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, the determination module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

## Claims

1. A network integration control method, comprising:
Transmitting (11), by a Near Real Time Radio Access Network, RAN, Intelligent Controller, Near-RT RIC, a control request message to a network node, the control request message comprising M Control service styles corresponding to a Control service, relevant information about one or more control actions corresponding to each Control service style, and the quantity of Control service styles indicated in the control request message; and
Receiving (12), by the Near-RT RIC, a control acknowledgement message from the network node, the control acknowledgement message comprising the quantity of Control service styles comprised in the control acknowledgement message, and an execution outcome of each control action in the M Control service styles performed by the network node, wherein M is an integer greater than 1.

2. The network integration control method according to claim 1, further comprising:
transmitting a subscription request message for subscribing an Insert service to the network node, the subscription request message comprising action definition about one or more Insert actions corresponding to each of the subscribed M Insert service styles; and
receiving an Insert indication message from the network node, the Insert indication message comprising relevant information about the Insert actions corresponding to each of the M Insert service styles.

3. The network integration control method according to claim 2, wherein the action definition comprises at least one of the quantity of requested Insert service styles, requested Insert service styles, the quantity of Insert Actions comprised in each Insert service style, an Insert action Identity, ID, the quantity of RAN parameters for the Insert actions, or an RAN parameter ID.

4. The network integration control method according to claim 2, wherein the Insert indication message comprises a first information element and a second information element, the first information element comprises at least one of a User Equipment, UE, ID corresponding to the network node, an Insert type of the Insert indication message or an event trigger condition ID, and the second information element comprises at least one of the quantity of Insert service styles indicated in the Insert indication message, the Insert service styles indicated in the Insert indication message, the quantity of Insert actions comprised in each Insert service style, an Insert action ID, the quantity of RAN parameters for the Insert actions, an RAN parameter ID, or an RAN parameter value type.

5. The network integration control method according to claim 2, wherein the transmitting the control request message to the network node comprises transmitting the control request message to the network node in accordance with the Insert indication message.

6. The network integration control method according to claim 1, wherein the control request message comprises a third information element and a fourth information element, the third information element comprises at least one of a UE ID corresponding to the network node, a Control style of the control request message, or a control decision, and the fourth information element comprises at least one of the Control service styles indicated in the control request message, the quantity of control actions comprised in each Control service style, a control action ID, a control decision of the control action, the quantity of RAN parameters for the control action, an RAN parameter ID, or an RAN parameter value type.

7. The network integration control method according to claim 6, wherein the control decision is used to indicate an admission condition about at least one control action in an RIC control message information element;
and/or,
wherein the Control style is multiple configuration control.

8. The network integration control method according to claim 1, wherein the control acknowledgement message comprises at least one of the Control service styles comprised in the control acknowledgement message, the quantity of execution outcomes comprised in the control acknowledgement message, a control action ID, the quantity of RAN parameters, an RAN parameter ID, or an RAN parameter value type.

9. A network integration control method, comprising:
Receiving (61), by a network node, a control request message from a Near Real Time Radio Access Network, RAN, Intelligent Controller, Near-RT RIC, the control request message comprising M Control service styles corresponding to a Control service, relevant information about one or more control actions corresponding to each Control service style, and the quantity of Control service styles indicated in the control request message; and
Transmitting (62), by the network node, a control acknowledgement message to the Near-RT RIC in accordance with the control request message, the control acknowledgement message comprising the quantity of Control service styles comprised in the control acknowledgement message, and an execution outcome of each control action in the M Control service styles performed by the network node, wherein M is an integer greater than 1.

10. The network integration control method according to claim 9, further comprising:
receiving a subscription request message from the Near-RT RIC, the subscription request message comprising action definition about one or more Insert actions corresponding to each of the subscribed M Insert service styles; and
transmitting an Insert indication message to the Near-RT RIC, the Insert indication message comprising relevant information about the Insert actions corresponding to the each of the M Insert service styles.

11. The network integration control method according to claim 10, wherein the action definition comprises at least one of the quantity of requested Insert service styles, requested Insert service styles, the quantity of Insert Actions comprised in each Insert service style, an Insert action Identity, ID, the quantity of RAN parameters for the Insert actions, or an RAN parameter ID;
and/or,
wherein the Insert indication message comprises a first information element and a second information element, the first information element comprises at least one of a User Equipment, UE, ID corresponding to the network node, an Insert type of the Insert indication message or an event trigger condition ID, and the second information element comprises at least one of the quantity of Insert service styles indicated in the Insert indication message, the Insert service styles indicated in the Insert indication message, the quantity of Insert actions comprised in each Insert service style, an Insert action ID, the quantity of RAN parameters for the Insert actions, an RAN parameter ID, or an RAN parameter value type.

12. The network integration control method according to claim 9, wherein the control request message comprises a third information element and a fourth information element, the third information element comprises at least one of a UE ID corresponding to the network node, a Control style of the control request message, or a control decision, and the fourth information element comprises at least one of the Control service styles indicated in the control request message, the quantity of control actions comprised in each Control service style, a control action ID, a control decision of the control action, the quantity of RAN parameters for the control action, an RAN parameter ID, or an RAN parameter value type.

13. The network integration control method according to claim 12, wherein the control decision is used to indicate an admission condition about at least one control action in an RIC control message information element;
and/or,
wherein the Control style is multiple configuration control.

14. A Near Real Time Radio Access Network, RAN, Intelligent Controller, Near-RT RIC (700), comprising:
a first transmission unit (710) configured to transmit a control request message to a network node, the control request message comprising M Control service styles corresponding to a Control service and relevant information about one or more control actions corresponding to each Control service style, and the quantity of Control service styles indicated in the control request message; and
a first reception unit (720) configured to receive a control acknowledgement message from the network node, the control acknowledgement message comprising the quantity of Control service styles comprised in the control acknowledgement message, and an execution outcome of each control action in the M Control service styles performed by the network node, wherein M is an integer greater than 1.

15. A network node, comprising:
a second reception unit (810) configured to receive a control request message from a Near Real Time Radio Access Network, RAN, Intelligent Controller, Near-RT RIC, the control request message comprising M Control service styles corresponding to a Control service and relevant information about one or more control actions corresponding to each Control service style, and the quantity of Control service styles indicated in the control request message; and
a second transmission unit (820) configured to transmit a control acknowledgement message to the Near-RT RIC in accordance with the control request message, the control acknowledgement message comprising the quantity of Control service styles comprised in the control acknowledgement message, and an execution outcome of each control action in the M Control service styles performed by the network node, wherein M is an integer greater than 1.

## Patentansprüche

1. Netzintegrationssteuerungsverfahren, umfassend:
Senden (11), durch einen Near Real Time Radio Access Network (RAN) Intelligent Controller (Near-RT RIC), einer Steuerungsanforderungsnachricht an einen Netzknoten, wobei die Steuerungsanforderungsnachricht M Steuerungsdienststile entsprechend einem Steuerungsdienst, relevante Informationen über eine oder mehrere Steuerungsaktionen entsprechend jedem Steuerungsdienststil und die Anzahl von in der Steuerungsanforderungsnachricht angegebenen Steuerungsdienststilen umfasst; und
Empfangen (12), durch den Near-RT RIC, einer Steuerungsbestätigungsnachricht von dem Netzknoten, wobei die Steuerungsbestätigungsnachricht die Anzahl von in der Steuerungsbestätigungsnachricht enthaltenen Steuerungsdienststilen und ein Ausführungsergebnis jeder Steuerungsaktion in den M Steuerungsdienststilen, die durch den Netzknoten durchgeführt werden, wobei M eine ganze Zahl größer als 1 ist, umfasst.

2. Netzintegrationssteuerungsverfahren nach Anspruch 1, des Weiteren umfassend:
Senden einer Subskriptionsanforderungsnachricht zum Subskribieren eines Einfügedienstes an den Netzknoten, wobei die Subskriptionsanforderungsnachricht eine Aktionsdefinition über eine oder mehrere Einfügeaktionen umfasst, die jedem der subskribierten M Einfügedienststile entsprechen; und
Empfangen einer Einfügeangabenachricht von dem Netzknoten, wobei die Einfügeangabenachricht relevante Informationen über die Einfügeaktionen umfasst, die jedem der M Einfügedienststile entsprechen.

3. Netzintegrationssteuerungsverfahren nach Anspruch 2, wobei die Aktionsdefinition mindestens eines von der Anzahl von angeforderten Einfügedienststilen, angeforderten Einfügedienststilen, der Anzahl von in jedem Einfügedienststil enthaltenen Einfügeaktionen, einer Einfügeaktionsidentität (ID), der Anzahl von RAN-Parametern für die Einfügeaktionen oder einer RAN-Parameter-ID umfasst.

4. Netzintegrationssteuerungsverfahren nach Anspruch 2, wobei die Einfügeangabenachricht ein erstes Informationselement und ein zweites Informationselement umfasst, wobei das erste Informationselement mindestens eines von einer Benutzerausrüstungs(UE)-ID, die dem Netzknoten entspricht, einem Einfügetyp der Einfügeangabenachricht oder einer Ereignisauslöserbedingungs-ID umfasst und das zweite Informationselement mindestens eines von der Anzahl von in der Einfügeangabenachricht angegebenen Einfügedienststilen, den in der Einfügeangabenachricht angegebenen Einfügedienststilen, der Anzahl von in jedem Einfügedienststil enthaltenen Einfügeaktionen, einer Einfügeaktions-ID, der Anzahl von RAN-Parametern für die Einfügeaktionen, einer RAN-Parameter-ID oder einem RAN-Parameterwerttyp umfasst.

5. Netzintegrationssteuerungsverfahren nach Anspruch 2, wobei das Senden der Steueranforderungsnachricht an den Netzknoten das Senden der Steueranforderungsnachricht an den Netzknoten gemäß der Einfügeangabenachricht umfasst.

6. Netzintegrationssteuerungsverfahren nach Anspruch 1, wobei die Steueranforderungsnachricht ein drittes Informationselement und ein viertes Informationselement umfasst, wobei das dritte Informationselement mindestens eines von einer UE-ID, die dem Netzknoten entspricht, einem Steuerungsstil der Steueranforderungsnachricht oder einer Steuerungsentscheidung umfasst und das vierte Informationselement mindestens eines von den in der Steueranforderungsnachricht angegebenen Steuerungsdienststilen, der Anzahl von in jedem Steuerungsdienststil enthaltenen Steuerungsaktionen, einer Steuerungsaktions-ID, einer Steuerungsentscheidung der Steuerungsaktion, der Anzahl von RAN-Parametern für die Steuerungsaktion, einer RAN-Parameter-ID oder einem RAN-Parameterwerttyp umfasst.

7. Netzintegrationssteuerungsverfahren nach Anspruch 6, wobei die Steuerungsentscheidung verwendet wird, um eine Zulassungsbedingung bezüglich mindestens einer Steuerungsaktion in einem RIC-Steuerungsnachricht-Informationselement anzugeben;
und/oder
wobei der Steuerungsstil eine Mehrfachkonfigurationssteuerung ist.

8. Netzintegrationssteuerungsverfahren nach Anspruch 1, wobei die Steuerungsbestätigungsnachricht mindestens eines von den in der Steuerungsbestätigungsnachricht enthaltenen Steuerungsdienststilen, der Anzahl von in der Steuerungsbestätigungsnachricht enthaltenen Ausführungsergebnissen, einer Steuerungsaktions-ID, der Anzahl von RAN-Parametern, einer RAN-Parameter-ID oder einem RAN-Parameterwerttyp umfasst.

9. Netzintegrationssteuerungsverfahren, umfassend:
Empfangen (61), durch einen Netzknoten, einer Steueranforderungsnachricht von einem Near Real Time Radio Access Network (RAN) Intelligent Controller (Near-RT RIC), wobei die Steuerungsanforderungsnachricht M Steuerungsdienststile entsprechend einem Steuerungsdienst, relevante Informationen über eine oder mehrere Steuerungsaktionen entsprechend jedem Steuerungsdienststil und die Anzahl von in der Steuerungsanforderungsnachricht angegebenen Steuerungsdienststilen umfasst; und
Senden (62), durch den Netzknoten, einer Steuerungsbestätigungsnachricht an den Near-RT RIC gemäß der Steuerungsanforderungsnachricht, wobei die Steuerungsbestätigungsnachricht die Anzahl von in der Steuerungsbestätigungsnachricht enthaltenen Steuerungsdienststilen und ein Ausführungsergebnis jeder Steuerungsaktion in den M Steuerungsdienststilen, die durch den Netzknoten durchgeführt werden, wobei M eine ganze Zahl größer als 1 ist, umfasst.

10. Netzintegrationssteuerungsverfahren nach Anspruch 9, des Weiteren umfassend:
Empfangen einer Subskriptionsanforderungsnachricht von dem Near-RT RIC, wobei die Subskriptionsanforderungsnachricht eine Aktionsdefinition über eine oder mehrere Einfügeaktionen umfasst, die jedem der subskribierten M Einfügedienststile entsprechen; und
Senden einer Einfügeangabenachricht an den Near-RT RIC, wobei die Einfügeangabenachricht relevante Informationen über die Einfügeaktionen umfasst, die jedem der M Einfügedienststile entsprechen.

11. Netzintegrationssteuerungsverfahren nach Anspruch 10, wobei die Aktionsdefinition mindestens eines von der Anzahl von angeforderten Einfügedienststilen, angeforderten Einfügedienststilen, der Anzahl von in jedem Einfügedienststil enthaltenen Einfügeaktionen, einer Einfügeaktionsidentität (ID), der Anzahl von RAN-Parametern für die Einfügeaktionen oder einer RAN-Parameter-ID umfasst;
und/oder
wobei die Einfügeangabenachricht ein erstes Informationselement und ein zweites Informationselement umfasst, wobei das erste Informationselement mindestens eines von einer Benutzerausrüstungs(UE)-ID, die dem Netzknoten entspricht, einem Einfügetyp der Einfügeangabenachricht oder einer Ereignisauslöserbedingungs-ID umfasst und das zweite Informationselement mindestens eines von der Anzahl von in der Einfügeangabenachricht angegebenen Einfügedienststilen, den in der Einfügeangabenachricht angegebenen Einfügedienststilen, der Anzahl von in jedem Einfügedienststil enthaltenen Einfügeaktionen, einer Einfügeaktions-ID, der Anzahl von RAN-Parametern für die Einfügeaktionen, einer RAN-Parameter-ID oder einem RAN-Parameterwerttyp umfasst.

12. Netzintegrationssteuerungsverfahren nach Anspruch 9, wobei die Steueranforderungsnachricht ein drittes Informationselement und ein viertes Informationselement umfasst, wobei das dritte Informationselement mindestens eines von einer UE-ID, die dem Netzknoten entspricht, einem Steuerungsstil der Steueranforderungsnachricht oder einer Steuerungsentscheidung umfasst und das vierte Informationselement mindestens eines von den in der Steueranforderungsnachricht angegebenen Steuerungsdienststilen, der Anzahl von in jedem Steuerungsdienststil enthaltenen Steuerungsaktionen, einer Steuerungsaktions-ID, einer Steuerungsentscheidung der Steuerungsaktion, der Anzahl von RAN-Parameter für die Steuerungsaktion, einer RAN-Parameter-ID oder einem RAN-Parameterwerttyp umfasst.

13. Netzintegrationssteuerungsverfahren nach Anspruch 12, wobei die Steuerungsentscheidung verwendet wird, um eine Zulassungsbedingung bezüglich mindestens einer Steuerungsaktion in einem RIC-Steuerungsnachricht-Informationselement anzugeben;
und/oder
wobei der Steuerungsstil eine Mehrfachkonfigurationssteuerung ist.

14. Near Real Time Radio Access Network (RAN) Intelligent Controller (Near-RT RIC) (700), umfassend:
eine erste Sendeeinheit (710), die eingerichtet ist zum Senden einer Steuerungsanforderungsnachricht an einen Netzknoten, wobei die Steuerungsanforderungsnachricht M Steuerungsdienststile entsprechend einem Steuerungsdienst und relevante Informationen über eine oder mehrere Steuerungsaktionen entsprechend jedem Steuerungsdienststil und die Anzahl von in der Steuerungsanforderungsnachricht angegebenen Steuerungsdienststilen umfasst; und
eine erste Empfangseinheit (720), die eingerichtet ist zum Empfangen einer Steuerungsbestätigungsnachricht von dem Netzknoten, wobei die Steuerungsbestätigungsnachricht die Anzahl von in der Steuerungsbestätigungsnachricht enthaltenen Steuerungsdienststilen und ein Ausführungsergebnis jeder Steuerungsaktion in den M Steuerungsdienststilen, die durch den Netzknoten durchgeführt werden, wobei M eine ganze Zahl größer als 1 ist, umfasst.

15. Netzknoten, umfassend:
eine zweite Empfangseinheit (810), die eingerichtet ist zum Empfangen einer Steuerungsanforderungsnachricht von einem Near Real Time Radio Access Network (RAN) Intelligent Controller (Near-RT RIC), wobei die Steuerungsanforderungsnachricht M Steuerungsdienststile entsprechend einem Steuerungsdienst und relevante Informationen über eine oder mehrere Steuerungsaktionen entsprechend jedem Steuerungsdienststil und die Anzahl von in der Steuerungsanforderungsnachricht angegebenen Steuerungsdienststilen umfasst; und
eine zweite Sendeeinheit (820), die eingerichtet ist zum Senden einer Steuerungsbestätigungsnachricht an den Near-RT RIC gemäß der Steuerungsanforderungsnachricht, wobei die Steuerungsbestätigungsnachricht die Anzahl von in der Steuerungsbestätigungsnachricht enthaltenen Steuerungsdienststilen und ein Ausführungsergebnis jeder Steuerungsaktion in den M Steuerungsdienststilen, die durch den Netzknoten durchgeführt werden, wobei M eine ganze Zahl größer als 1 ist, umfasst.

## Revendications

1. Procédé de commande d'intégration de réseau, comprenant :
la transmission (11), par un contrôleur intelligent de réseau d'accès radio, RAN, en temps quasi réel, RIC Near-RT, d'un message de demande de commande à un nœud de réseau, le message de demande de commande comprenant M styles de service de commande correspondant à un service de commande, des informations pertinentes sur une ou plusieurs actions de commande correspondant à chaque style de service de commande, et la quantité de styles de service de commande indiqués dans le message de demande de commande ; et
la réception (12), par le RIC Near-RT, d'un message d'accusé de réception de commande à partir du nœud de réseau, le message d'accusé de réception de commande comprenant la quantité de styles de service de commande compris dans le message d'accusé de réception de commande, et un résultat d'exécution de chaque action de commande dans les M styles de service de commande effectués par le nœud de réseau, où M est un nombre entier supérieur à 1.

2. Procédé de commande d'intégration de réseau selon la revendication 1, comprenant en outre :
la transmission d'un message de demande d'abonnement pour s'abonner à un service d'insertion au nœud de réseau, le message de demande d'abonnement comprenant une définition d'action concernant une ou plusieurs actions d'insertion correspondant à chacun des M styles de service d'insertion souscrits ; et
la réception d'un message d'indication d'insertion à partir du nœud de réseau, le message d'indication d'insertion comprenant des informations pertinentes sur les actions d'insertion correspondant à chacun des M styles de service d'insertion.

3. Procédé de commande d'intégration de réseau selon la revendication 2, dans lequel la définition d'action comprend au moins l'un parmi la quantité de styles de service d'insertion demandés, des styles de service d'insertion demandés, la quantité d'actions d'insertion comprises dans chaque style de service d'insertion, une identité, ID, d'action d'insertion, la quantité de paramètres RAN pour les actions d'insertion, ou un ID de paramètre RAN.

4. Procédé de commande d'intégration de réseau selon la revendication 2, dans lequel le message d'indication d'insertion comprend un premier élément d'information et un second élément d'information, le premier élément d'information comprend au moins l'un parmi un ID d'équipement d'utilisateur, UE, correspondant au nœud de réseau, un type d'insertion du message d'indication d'insertion ou un ID de condition de déclenchement d'événement, et le second élément d'information comprend au moins l'un parmi la quantité de styles de service d'insertion indiqués dans le message d'indication d'insertion, les styles de service d'insertion indiqués dans le message d'indication d'insertion, la quantité d'actions d'insertion comprises dans chaque style de service d'insertion, un ID d'action d'insertion, la quantité de paramètres RAN pour les actions d'insertion, un ID de paramètre RAN, ou un type de valeur de paramètre RAN.

5. Procédé de commande d'intégration de réseau selon la revendication 2, dans lequel la transmission du message de demande de commande au nœud de réseau comprend la transmission du message de demande de commande au nœud de réseau conformément au message d'indication d'insertion.

6. Procédé de commande d'intégration de réseau selon la revendication 1, dans lequel le message de demande de commande comprend un troisième élément d'information et un quatrième élément d'information, le troisième élément d'information comprend au moins l'un parmi un ID d'UE correspondant au nœud de réseau, un style de commande du message de demande de commande, ou une décision de commande, et le quatrième élément d'information comprend au moins l'un parmi les styles de service de commande indiqués dans le message de demande de commande, la quantité d'actions de commande comprises dans chaque style de service de commande, un ID d'action de commande, une décision de commande de l'action de commande, la quantité de paramètres RAN pour l'action de commande, un ID de paramètre RAN, ou un type de valeur de paramètre RAN.

7. Procédé de commande d'intégration de réseau selon la revendication 6, dans lequel la décision de commande est utilisée pour indiquer une condition d'admission concernant au moins une action de commande dans un élément d'information de message de commande RIC ;
et/ou,
dans lequel le style de commande est une commande de configuration multiple.

8. Procédé de commande d'intégration de réseau selon la revendication 1, dans lequel le message d'accusé de réception de commande comprend au moins l'un parmi les styles de service de commande compris dans le message d'accusé de réception de commande, la quantité de résultats d'exécution compris dans le message d'accusé de réception de commande, un ID d'action de commande, la quantité de paramètres RAN, un ID de paramètre RAN, ou un type de valeur de paramètre RAN.

9. Procédé de commande d'intégration de réseau, comprenant :
la réception (61), par un nœud de réseau, d'un message de demande de commande à partir d'un contrôleur intelligent de réseau d'accès radio, RAN, en temps quasi réel, RIC Near-RT,, le message de demande de commande comprenant M styles de service de commande correspondant à un service de commande, des informations pertinentes sur une ou plusieurs actions de commande correspondant à chaque style de service de commande, et la quantité de styles de service de commande indiqués dans le message de demande de commande ; et
la transmission (62), par le nœud de réseau, d'un message d'accusé de réception de commande au RIC Near-RT conformément au message de demande de commande, le message d'accusé de réception de commande comprenant la quantité de styles de service de commande compris dans le message d'accusé de réception de commande, et un résultat d'exécution de chaque action de commande dans les M styles de service de commande effectués par le nœud de réseau, M étant un nombre entier supérieur à 1.

10. Procédé de commande d'intégration de réseau selon la revendication 9, comprenant en outre :
la réception d'un message de demande d'abonnement à partir du RIC Near-RT, le message de demande d'abonnement comprenant une définition d'action concernant une ou plusieurs actions d'insertion correspondant à chacun des M styles de service d'insertion souscrits ; et
la transmission d'un message d'indication d'insertion au RIC Near-RT, le message d'indication d'insertion comprenant des informations pertinentes sur les actions d'insertion correspondant à chacun des M styles de service d'insertion.

11. Procédé de commande d'intégration de réseau selon la revendication 10, dans lequel la définition d'action comprend au moins l'un parmi la quantité de styles de service d'insertion demandés, des styles de service d'insertion demandés, la quantité d'actions d'insertion comprises dans chaque style de service d'insertion, une identité, ID, d'action d'insertion, la quantité de paramètres RAN pour les actions d'insertion, ou une ID de paramètre RAN ;
et/ou,
dans lequel le message d'indication d'insertion comprend un premier élément d'information et un second élément d'information, le premier élément d'information comprend au moins l'un parmi un ID d'équipement d'utilisateur, UE, correspondant au nœud de réseau, un type d'insertion du message d'indication d'insertion ou un ID de condition de déclenchement d'événement, et le second élément d'information comprend au moins l'un parmi la quantité de styles de service d'insertion indiqués dans le message d'indication d'insertion, les styles de service d'insertion indiqués dans le message d'indication d'insertion, la quantité d'actions d'insertion comprises dans chaque style de service d'insertion, un ID d'action d'insertion, la quantité de paramètres RAN pour les actions d'insertion, un ID de paramètre RAN, ou un type de valeur de paramètre RAN.

12. Procédé de commande d'intégration de réseau selon la revendication 9, dans lequel le message de demande de commande comprend un troisième élément d'information et un quatrième élément d'information, le troisième élément d'information comprend au moins l'un parmi un ID d'UE correspondant au nœud de réseau, un style de commande du message de demande de commande, ou une décision de commande, et le quatrième élément d'information comprend au moins l'un parmi les styles de service de commande indiqués dans le message de demande de commande, la quantité d'actions de commande comprises dans chaque style de service de commande, un ID d'action de commande, une décision de commande de l'action de commande, la quantité de paramètres RAN pour l'action de commande, un ID de paramètre RAN, ou un type de valeur de paramètre RAN.

13. Procédé de commande d'intégration de réseau selon la revendication 12, dans lequel la décision de commande est utilisée pour indiquer une condition d'admission concernant au moins une action de commande dans un élément d'information de message de commande RIC ;
et/ou,
dans lequel le style de commande est une commande de configuration multiple.

14. Contrôleur intelligent de réseau d'accès radio, RAN, en temps quasi réel, RIC Near-RT, (700), comprenant :
une première unité de transmission (710) configurée pour transmettre un message de demande de commande à un nœud de réseau, le message de demande de commande comprenant M styles de service de commande correspondant à un service de commande et des informations pertinentes sur une ou plusieurs actions de commande correspondant à chaque style de service de commande, et la quantité de styles de service de commande indiqués dans le message de demande de commande ; et
une première unité de réception (720) configurée pour recevoir un message d'accusé de réception de commande à partir du nœud de réseau, le message d'accusé de réception de commande comprenant la quantité de styles de service de commande compris dans le message d'accusé de réception de commande, et un résultat d'exécution de chaque action de commande dans les M styles de service de commande effectués par le nœud de réseau, où M est un nombre entier supérieur à 1.

15. Nœud de réseau, comprenant :
une seconde unité de réception (810) configurée pour recevoir un message de demande de commande à partir d'un contrôleur intelligent de réseau d'accès radio, RAN, en temps quasi réel, RIC Near-RT, le message de demande de commande comprenant M styles de service de commande correspondant à un service de commande et des informations pertinentes sur une ou plusieurs actions de commande correspondant à chaque style de service de commande, et la quantité de styles de service de commande indiqués dans le message de demande de commande ; et
une seconde unité de transmission (820) configurée pour transmettre un message d'accusé de réception de commande au RIC Near-RT conformément au message de demande de commande, le message d'accusé de réception de commande comprenant la quantité de styles de service de commande compris dans le message d'accusé de réception de commande, et un résultat d'exécution de chaque action de commande dans les M styles de service de commande effectués par le nœud de réseau, M étant un nombre entier supérieur à 1.
